# EUROPEAN PATENT APPLICATION

(11) **EP 3 306 078 A1**
(43) Date of publication of application: **11.04.2018**
(21) Application number: 17188544.5
(22) Date of filing: 30.08.2017
(51) Int. Cl.: F03D 7/04, F03D 7/02

(54) **WIND FARM AND WIND POWER GENERATION APPARATUS**

(30) Priority: 06.10.2016 JP 2016197843
(71) Applicant: Hitachi, Ltd., Tokyo 100-8280 (JP)
(72) Inventor: OTAKE, Yusuke, Tokyo, 100-8280 (JP); KUSUNO, Nobuhiro, Tokyo, 100-8280 (JP); KAKUYA, Hiromu, Tokyo, 100-8280 (JP)
(74) Representative: MERH-IP Matias Erny Reichl Hoffmann Patentanwälte PartG mbB

(57) **Abstract**

A wind farm 1 including wind power generation apparatuses 2 the damage degrees of which can be held down and wind power generation apparatuses 2 can be provided without introducing a central processing unit for the wind farm 1 and new wind power generation apparatuses 2 having the rotation directions of their blades 23 different from each other.

A wind farm 1 includes at least plural wind power generation apparatuses 2 each of which includes a rotor 24 that rotates on receiving the wind and a yaw angle control device 33 for controlling the direction of the rotation plane of the rotor 24, and the wind farm further includes a control device 31 that determines a wake region on the basis of wind direction data and information regarding the direction of the rotation plane of the rotor 24 of a windward-located wind power generation apparatus 2a, and controls the direction of the rotation plane of the rotor 24 of the windward-located wind power generation apparatuses 2a on the basis of the determined wake region and positional information regarding a leeward-located wind power generation apparatus 2b.

## Description

### Technical Field

The present invention relates to wind farms, in each of which plural wind power generation apparatuses are installed, and wind power generation apparatuses and, in particular, to a wind farm that is able to reduce the damage degrees of wind power generation apparatuses installed therein and to wind power generation apparatuses appropriate to be installed in the wind farm.

### Background Art

In a wind farm where plural wind power generation apparatuses are installed adjacently to each other, a windmill wake passing through a windward-located wind power generation apparatus (a windmill wake is often referred to as a wake for short) flows into a leeward-located wind power generation apparatus. In this windmill wake, there arise a problem that the generated electric energy of each of the wind power generation apparatuses is reduced, a problem that the damage degrees of the wind power generation apparatuses are increased, and other problems. In order to cope with such problems, a method in which the tilt angles of the blades of the windward-located wind power generation apparatus are controlled, a method in which the rotation directions of the rotors of adjacent wind power generation apparatuses are set opposite to each other, and the like have been proposed.

For example, Patent Literature 1 discloses a method in which the tilt angle (pitch angle) of a windward-located wind power generation apparatus is controlled, and describes the configuration of a wind farm including plural wind power generation apparatuses (T1, Ti-1, and Ti) in which the operation parameters of the wind power generation apparatuses (T1, Ti-1, and Ti) are adjusted in such a way that an optimized target is achieved. In addition, Patent Literature discloses that the optimized target is achieved when the total output of the wind farm that is equal to the total sum of the individual outputs (Pi) of the plural wind power generation apparatuses (T1, Ti-1, and Ti) is maximized.

Furthermore, Patent Literature 2 discloses the configuration of a wind farm where first wind power generation apparatuses having rotors that rotate in a first rotation direction and second wind power generation apparatuses having rotors that rotate in a second rotation direction opposite to the rotation direction of the rotors of the first wind power generation apparatuses are disposed with constant distances away from each other in a lateral direction or a longitudinal direction. It is disclosed that each of the first wind power generation apparatuses and each of the second wind power generation apparatuses are adjacent to each other and disposed alternately, and because rotors rotate in opposite directions to each other direction, the effects of the vortex flows generated by the rotations of the respective rotors are reduced reciprocally, which extends the life spans of these wind power generation apparatuses.

### Citation List

### Patent Literature

Patent Literature 1: Japanese Unexamined Patent Application Publication (Translation of PCT Application) No. 2010-526963
Patent Literature 2: Japanese Unexamined Patent Application Publication No. 2015-155690

### Summary of Invention

### Technical Problem

However, in the wind farm described in Patent Literature 1, there is a possibility that the equipment expense of the wind farm is increased because a network for aggregating information from all the wind power generation apparatuses, and a central processing unit for determining control parameters have to be introduced. In addition, in the wind farm described in Patent Literature 2, it is necessary to prepare two kinds of wind power generation apparatuses that respectively have the rotation directions of blades different from each other, so that it is difficult to apply this method to, for example, existing wind farms.

Therefore, in the present invention, a wind farm including wind power generation apparatuses the damage degrees of which can be held down and wind power generation apparatuses suitable to be installed in such a wind farm are provided without introducing a central processing unit for the wind farm and new wind power generation apparatuses having the rotation directions of their blades different from each other.

### Solution to Problem

In order to solve the abovementioned problems, a wind farm according to the present invention includes at least plural power generation apparatuses each of which includes a rotor that rotates on receiving the wind and a yaw angle control device for controlling the direction of the rotation plane of the rotor. The wind farm further includes a control device that determines a wake region on the basis of wind direction data and information regarding the direction of the rotation plane of the rotor of a windward-located wind power generation apparatus, and controls the direction of the rotation plane of the rotor of the windward-located wind power generation apparatuses on the basis of the determined wake region and positional information regarding a leeward-located wind power generation apparatus.

Furthermore a wind power generation apparatus according to the present invention is a wind power generation apparatus that can be installed in a wind farm, and includes at least: a rotor that rotates on receiving the wind; a yaw angle control device that controls the direction of the rotation plane of the rotor; and a control device that determines a wake region on the basis of wind direction data and information regarding the direction of the rotation plane of the rotor, and controls the direction of the rotation plane of the rotor on the basis of the determined wake region and positional information regarding other leeward-located wind power generation apparatuses.

### Advantageous Effects of Invention

According to the present invention, a wind farm including wind power generation apparatuses the damage degrees of which can be held down and wind power generation apparatuses can be provided without introducing a central processing unit for the wind farm and new wind power generation apparatuses having the rotation directions of their blades different from each other.

Problems, configurations, and advantageous effects other than those described above will be revealed in accordance with the explanations of the following embodiments.

### Brief Description of Drawings

Fig. 1 is the overall schematic configuration diagram of a wind power generation apparatus of a first embodiment according to one example of the present invention.
Fig. 2 is the functional block diagram of a control device shown in Fig. 1.
Fig. 3 is a flowchart showing the process flow of the control device shown in Fig. 2.
Fig. 4 is a diagram showing the relation between a windward-located wind power generation apparatus and a leeward-located wind power generation apparatus both of which are installed in a wind farm.
Fig. 5 is a top view showing an example of a small-sized wind farm including a windward-located wind power generation apparatus and a leeward-located wind power generation apparatus.
Fig. 6 is a top view showing an example of a large-sized wind farm including many wind power generation apparatuses.
Fig. 7 is a diagram showing the propagation directions of a windmill wake generated by the relation between the direction of the rotation plane of a rotor included in a wind power generation apparatus and a wind direction.
Fig. 8 is a diagram showing an example of control of the direction of the rotation plane of a rotor included in a windward-located wind power generation apparatus.
Fig. 9 is a diagram showing an example of control of the direction of the rotation plane of a rotor included in a windward-located wind power generation apparatus.
Fig. 10 is the functional block diagram of a control device included in a wind power generation apparatus of a second embodiment according to another example of the present invention.
Fig. 11 is a flowchart showing the process flow of the control device shown in Fig. 10.
Fig. 12 is the functional block diagram of a control device included in a wind power generation apparatus of a third embodiment according to another example of the present invention.
Fig. 13 is a flowchart showing the process flow of the control device shown in Fig. 12.
Fig. 14 is the functional block diagram of a control device included in a wind power generation apparatus of a fourth embodiment according to another example of the present invention.
Fig. 15 is a flowchart showing the process flow of the control device shown in Fig. 14.
Fig. 16 is the functional block diagram of a control device included in a wind power generation apparatus of a fifth embodiment according to another example of the present invention.
Fig. 17 is a flowchart showing the process flow of the control device shown in Fig. 16.

### Description of Embodiments

Although, as an example of a wind power generation apparatus according to the embodiments of the present invention, a downwind type wind power generation apparatus will be explained in this specification, the present invention can be applied to an upwind type wind power generation apparatus in a similar way. In addition, an example including a rotor composed of three blades and a hub will be shown, it is conceivable that a wind power generation apparatus includes a rotor composed of at least one blade and a hub. The wind farm, in which plural wind power generation apparatuses according to the embodiments of the present invention are installed adjacently to each other, can be installed anywhere such as on oceans, in mountainous regions, or in plan fields.

Hereinafter, the embodiments of the present invention will be explained with reference to the accompanying drawings. Here, the following embodiments will be made for describing some examples only, therefore it is not intended that the scope of the present invention is limited to these specific embodiments.

### First Embodiment

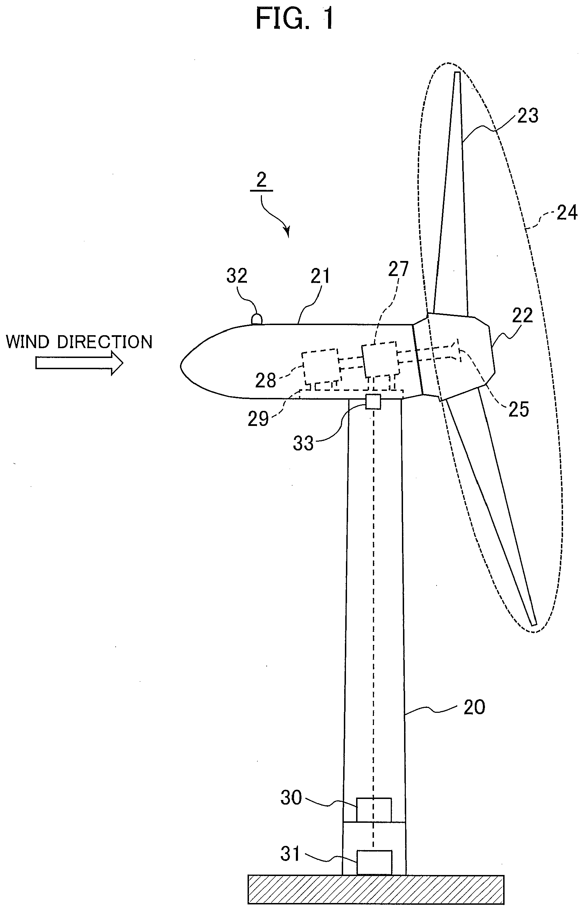

Fig. 1 is the overall schematic configuration diagram of a wind power generation apparatus of a first embodiment according to one example of the present invention. As shown in Fig. 1, a wind power generation apparatus 2 includes: blades 23 that rotates on receiving the wind; a hub 22 that supports the blades 23; a nacelle 21; and a tower 20 that rotatably supports the nacelle 21. In the nacelle 21, there are a main shaft 25 that is connected to the hub 22 and rotates in synchronization with the hub 22, and an electric power generator 28 that performs the generation operation of electric energy by rotating its rotor with a rotation speed that is speeded up by a speed-up machine 27 that is connected to the main shaft 25. A part that transmits the rotation energy of the blades 23 to the electric power generator 28 is referred to as a motive power transmission unit, and the motive power transmission unit according to this embodiment includes the main shaft 25 and the speed-up machine 27. Here, the speed-up machine 27 and the electric power generator 28 are supported on a main frame 29. Furthermore, the blades 23 and the hub 22 form a rotor 24. As shown in Fig. 1, an electric power converter 30 that converts the frequency of electric power, a switch for switching current, a transformer, and the like (the switch, the transformer, and the like are not shown), and a control device 31 are disposed on the inside of the tower 20. Although the electric power converter 30 and the control device 31 are installed on the bottom of the tower in Fig. 1, the installation location of these devices is not limited to the bottom of the tower, and it is conceivable that any location is adopted as long as the installation location is on the inside of the wind power generation apparatus 2. In addition, a wind direction/wind speed meter 32 for measuring wind direction/wind speed data is installed on the top surface of the nacelle 21. As the control device 31, a control panel or a SCADA (Supervisory Control And Data Acquisition) is used, for example.

Furthermore, the direction of the nacelle 21 is referred to as a yaw angle, and the wind power generation apparatus 2 includes a yaw angle control device 33 for controlling the direction of the nacelle 21, that is to say, the direction of the rotation plane of the rotor 24. As shown in Fig. 1, the yaw angle control device 33 is disposed between the bottom of the nacelle 21 and the apical end of the tower 20, and includes, for example, at least a not-shown actuator and a not-shown motor for driving the actuator. The motor included in the yaw angle control device 33 rotates on the basis of a yaw angle control command issued via a signal line by the control device 31, so that the actuator is displaced by a desirable amount of displacement. As a result, the nacelle 21 turns so as to provide a desirable yaw angle.

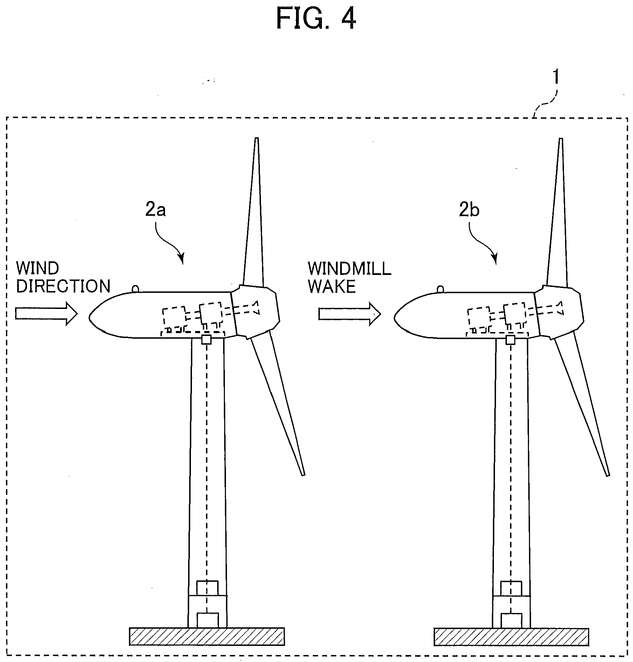

Hereinafter, a wind farm according to this embodiment will be explained. Fig. 4 is a diagram showing the relation between a windward-located wind power generation apparatus and a leeward-located wind power generation apparatus both of which are installed in the wind farm. Fig. 4 shows an example in which the wind that passes through a windward-located wind power generation apparatus 2a, which is installed in a wind farm 1, flows into a leeward-located wind power generation apparatus 2b. The wind that passes through the windward-located wind power generation apparatus 2a as shown in Fig. 4 is referred to as a windmill wake (also referred to as a wake for short). The wind characteristics of this windmill wake such as the wind direction and wind speed of this windmill wake are different in comparison with those of the wind before flowing into the windward-located wind power generation apparatus 2a. These variations of the wind characteristics depend on the operation state of the windward-located wind power generation apparatus 2a. The abovementioned operation state includes the tilt angles (pitch angles) of the blades 23 or the direction of the rotation plane of the rotor 24 of the wind power generation apparatus.

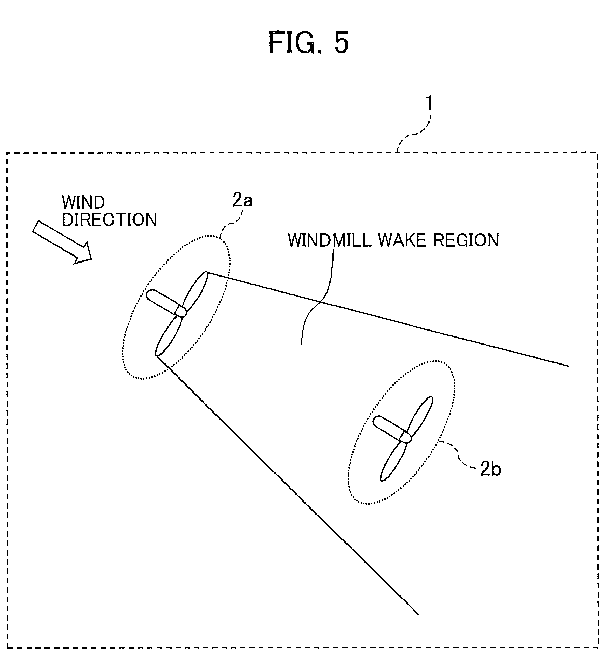

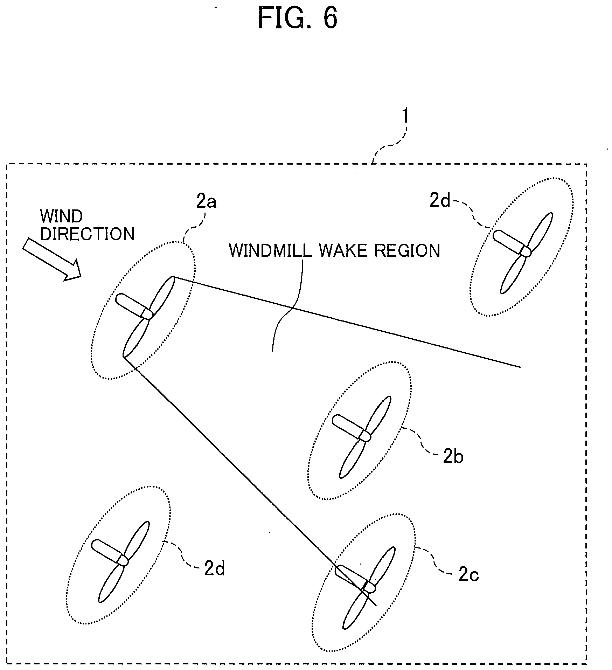

Fig. 5 is a top view showing an example of a small-sized wind farm including a windward-located wind power generation apparatus and a leeward-located wind power generation apparatus, and Fig. 6 is a top view showing an example of a large-sized wind farm including many wind power generation apparatuses. Fig. 5 shows an example of a small-sized wind farm 1 including one windward-located wind power generation apparatus 2a and one leeward-located wind power generation apparatus 2b, and Fig. 6 shows an example of a large-sized wind farm 1 including one windward-located wind power generation apparatus 2a, one leeward-located wind power generation apparatus 2b, one wind power generation apparatus 2c that is partially affected by a windmill wake, and many wind power generation apparatuses 2d. The abovementioned wind farm 1 means a complex wind power station including at least two wind power generation apparatuses or a wind power generation apparatus group.

Wind power generation apparatuses 2 installed in the wind farm 1 are classified into a windward-located wind power generation apparatus 2a relative to the wind direction, a leeward-located wind power generation apparatus 2b relative to the wind direction, a wind power generation apparatus 2c that is partially affected by a windmill wake, and other wind power generation apparatuses 2d, and this classification result varies according to the change of the wind direction. To put it concretely, although a windmill wake generated by the windward-located wind power generation apparatus 2a flows into the leeward-located wind power generation apparatus 2b in the example shown in Fig. 6, there is a possibility that the change of the wind direction brings about a case where the leeward-located wind power generation apparatus 2b, the wind power generation apparatus 2c, or the wind power generation apparatus 2d plays a role just like the windward-located wind power generation apparatus 2a does, or a case where the windward-located wind power generation apparatus 2a, the wind power generation apparatus 2c, or the wind power generation apparatus 2d plays a role just like the leeward-located wind power generation apparatus 2b does.

Hereinafter, a windmill wake (a wake) will be explained. The wind condition including the wind direction and wind speed of the wind that passes through the windward-located wind power generation apparatus 2a varies under the influence of the rotation of a rotor 24 included in the windward-located wind power generation apparatus 2a. In this case, it is conceivable that the wind condition includes not only the abovementioned wind direction and wind speed, but also includes all the physical characteristics regarding the wind such as the turbulent characteristic of the wind showing the degree of the turbulent flow of the wind and the shape of the eddy flow of the wind. As shown in Fig. 5 and Fig. 6, the windmill wake (the wake) flows leeward while spreading after passing through the windward-located wind power generation apparatus 2a. In other words, the windmill wake is propagated leeward while spreading and generating an eddy flow (a turbulent flow). A region in which a windmill wake is propagated leeward while spreading and generating an eddy flow (a turbulent flow) will be referred to as a windmill wake region (also referred to as a wake region) hereinafter.

The generated electric energy of each of the leeward-located wind power generation apparatus 2b and the leeward-located wind power generation apparatus 2c, which are shown in Fig. 6, is less than the generated electric energy of each of the wind power generation apparatuses 2d that are located on the outside of the windmill wake region (the wake region), and the damage degrees accumulated in the leeward-located wind power generation apparatus 2b and the leeward-located wind power generation apparatus 2c are increased. In particular, in the case of the wind power generation apparatus 2c, there is a tendency that the damage degree of the wind power generation apparatus 2c is especially increased because the wind condition of the wind flowing into the rotation plane of a rotor 24 becomes inhomogeneous. In other words, in the wind power generation apparatus 2c that is partially affected by the windmill wake, the amplitude of a load applied to the rotation plane of the rotor 24 is generated, with the result that a vibration is propagated to a speed-up machine 27 or an electric power generator 28 in a nacelle 21 via blades 23, a hub 22, and a main shaft 25, and also a vibration is propagated to a tower 20 that rotatably supports the tower. The amplitude of the load_that causes these vibrations have larges influence on the damage degrees of the respective devices included in the wind power generation apparatus 2c.

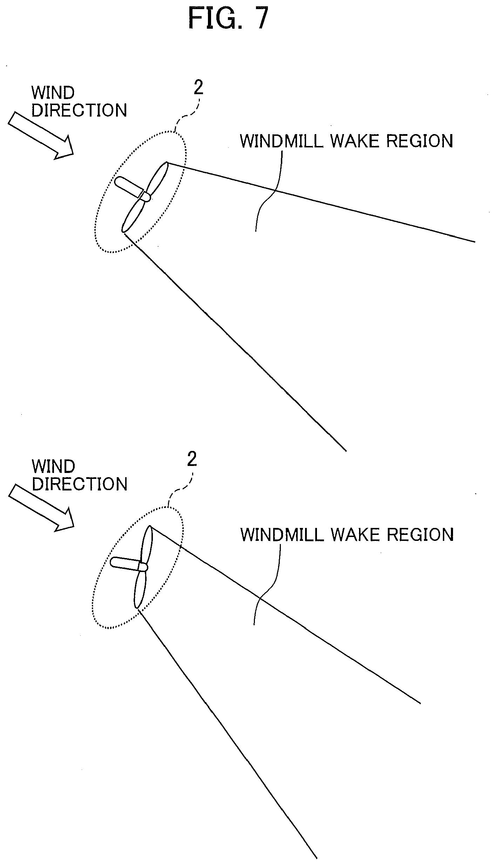

Fig. 7 shows the propagation directions of a windmill wake generated by the relation between the direction of the rotation plane of a rotor included in a wind power generation apparatus and a wind direction. As shown in the upper figure of Fig. 7, in the case where the rotation plane of the rotor 24 of a wind power generation apparatus 2 faces a wind direction squarely, a windmill wake is propagated in the same direction as the wind direction, and a windmill wake region (a wake region) is formed. On the other hand, as shown in the lower figure of Fig. 7, in the case where the rotation plane of the rotor 24 of the wind power generation apparatus 2 faces a wind direction at a slant, a windmill wake is propagated obliquely to the wind direction owing to a lateral force that the wind flowing into the wind power generation apparatus 2 receives from the rotation plane of the rotor 24, and a windmill wake region (a wake region) that is oblique to the wind direction is formed.

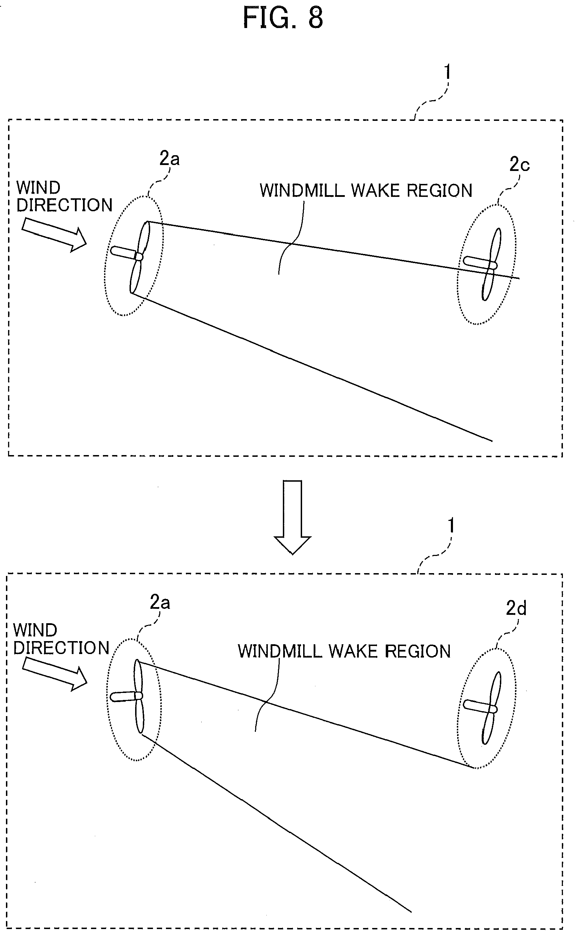

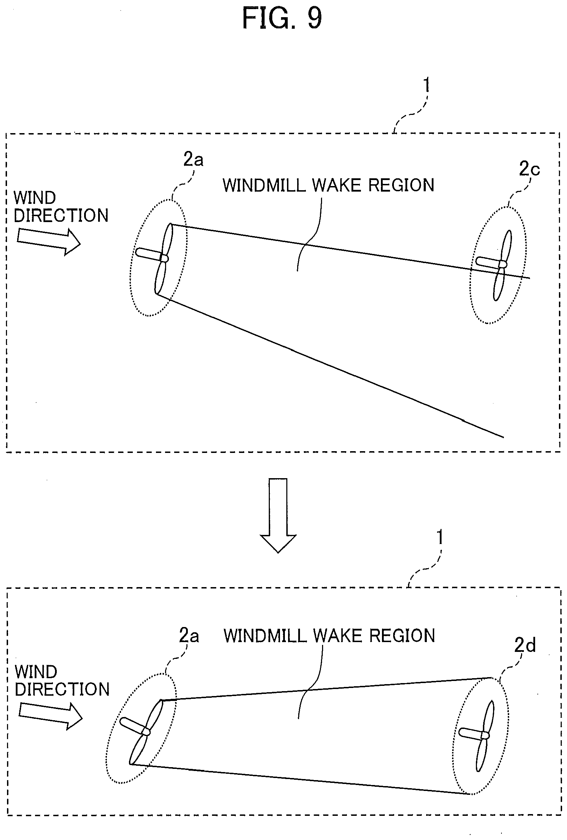

Fig. 8 and Fig. 9 show examples of control of the direction of the rotation plane of a rotor 24 included in a windward-located wind power generation apparatus 2a. In the case where there is no wind power generation apparatus 2c that partially receives the effect of the windmill wake of the windward-located wind power generation apparatus 2a, the windward-located wind power generation apparatus 2a controls its yaw angle as usual using a yaw angle control device 33 (Fig. 1) so that the rotation plane of its rotor 24 faces the wind direction squarely. On the contrary, as shown in the upper figure of Fig. 8, in the case where there is a wind power generation apparatus 2c into which the windmill wake of the windward-located wind power generation apparatus 2a partially flows, the windward-located wind power generation apparatus 2a changes the direction of the rotation plane of its rotor 24 by controlling its yaw angle using the yaw angle control device 33 included in the windward-located wind power generation apparatus 2a as shown in the lower figure of Fig. 8. This changes the propagation direction of the windmill wake, and the wind power generation apparatus 2c, into which the windmill wake has partially flown, is located on the outside of the wind wake region (the wake region), which avoids flowing of the windmill wake into the wind power generation apparatus 2c, and enables the wind power generation apparatus 2c to operate as a wind power generation apparatus 2d (the above control will be referred to as wake avoidance control hereinafter). In this case, if the difference between the direction of the rotation plane of the rotor 24 of the windward-located wind power generation apparatus 2a and the wind direction becomes large, the damage degree of the windward-located wind power generation apparatus 2a becomes large.

Therefore, as shown in the lower figure of Fig. 9, the direction of the rotation plane of the rotor 24 is changed by controlling the yaw angle using the yaw angle control device 33 included in the windward-located wind power generation apparatus 2a. This changes the propagation direction of the windmill wake, and the windmill wake flows into the entirety of the wind power generation apparatus 2c into which the windmill wake has partially flown, which enables the wind power generation apparatus 2c to operate as a wind power generation apparatus 2d (the above control will be referred to as wake centralization control hereinafter). In this wake centralization control, the entirety of the rotation plane of the rotor 24 included in the wind power generation apparatus 2c, into which the windmill wake has partially flown, is controlled so as to be located on the inside of the windmill wake region (the wake region). In addition, it is desirable the wind power generation apparatus 2c into which the windmill wake has partially flown is controlled so as to be located in the center of the windmill wake region (the wake region) in order to make the center of the windmill wake and the center of the rotation plane of the rotor 24 coincide with each other.

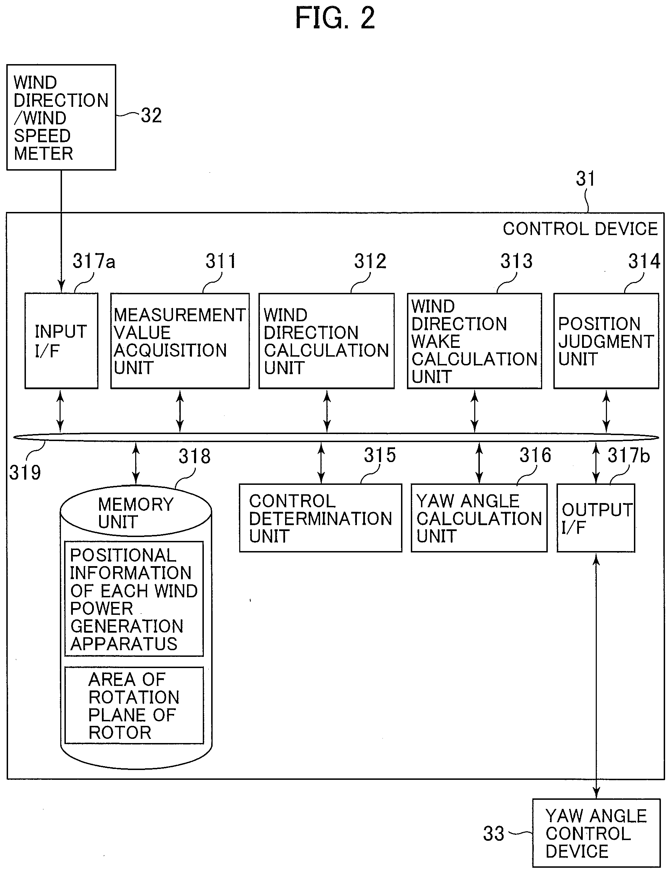

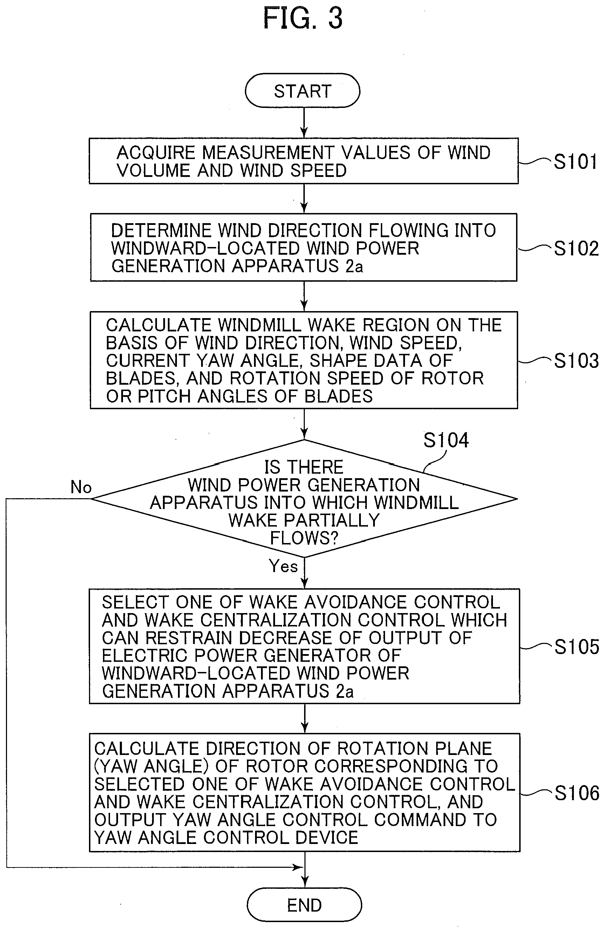

Fig. 2 shows the functional block diagram of the control device 31 disposed in the tower 20 of the wind power generation apparatus 2 shown in Fig. 1, and Fig. 3 is a flowchart showing the process flow of the control device shown in Fig. 2. Although the control device 31 that will be described below is installed in each of all wind power generation apparatuses (2a to 2d) installed in the wind farm 1, an operation of an after-mentioned flowchart shown in Fig. 3 is performed in the windward-located wind power generation apparatus 2. In other words, the operation is performed in the windward-located wind power generation apparatus 2a that is installed in the small-sized wind farm 1 shown in the above Fig. 5 or in the large-sized wind farm 1 shown in the above Fig. 6.

As shown in Fig. 2, the control device 31 includes: a measurement value acquisition unit 311; a wind direction calculation unit 312; a windmill wake calculation unit 313; a position judgment unit 314; a control determination unit 315; a yaw angle calculation unit 316; an input I/F 317a; an output I/F 317b; and a memory unit 318, and these devices are accessibly connected to each other via an internal bus 319. The measurement value acquisition unit 311, the wind direction calculation unit 312, the windmill wake calculation unit 313, the position judgment unit 314, the control determination unit 315, and the yaw angle calculation unit 316 are realized, for example, by a processor such as a not-shown CPU (Central Processing Unit), a ROM that stores various programs, a RAM that temporarily stores data in the middle of calculation, and a memory device such as an external memory device, and at the same time, the processor such as the CPU reads out and executes the various programs stored in the ROM, and stores calculation results that are obtained as execution results in the RAM or in the external memory device. Here, although the abovementioned units are obtained after being divided into the individual functional blocks for an easy understanding of the explanation, the wind direction calculation unit 312, the windmill wake calculation unit 313, the position judgment unit 314, the control determination unit 315, and the yaw angle calculation unit 316 can be integrated into one calculation unit, or these desired individual functional blocks can be integrated into one configuration.

The measurement value acquisition unit 311 acquires wind direction data and wind speed data measured by the wind direction/wind speed meter 32 via the input I/F 317a and the internal bus 319, and performs, for example, A/D conversion processing, smoothing processing (noise elimination), normalization processing, or the like on the acquired data.

The memory unit 318 stores at least the positional information and the area of the rotation plane of the rotor 24 of its own (of the windward-located wind power generation apparatus 2a) in the wind farm 1, and the positional information and the areas of the rotation planes of the rotors 24 of other wind power generation apparatuses (2b to 2d) installed in the wind farm 1. Here, it will be assumed that the area of the rotation plane of a rotor 24 is, for example, the area of the rotation plane of the rotor 24 viewed squarely with the relevant yaw angle 0° plus the area of the relevant tower 20. In addition, the memory unit 318 further stores the current yaw angle of itself (the windward-located wind power generation apparatus 2a) (information regarding the direction of the rotation plane of the relevant rotor 24), the shape data of the relevant blades 23, and the rotation speed of the rotor 24 or the pitch angles of the blades 23.

The wind direction calculation unit 312 acquires the wind direction data dealt with by the measurement value acquisition unit 311 via the internal bus 319, and determines the wind direction of the wind flowing into the rotation plane of the rotor 24 of itself (the windward-located wind power generation apparatus 2a).

The windmill wake calculation unit 312 calculates a windmill wake region (a wake region) on the basis of, for example, the wind direction determined by the wind direction calculation unit 312; the wind speed data dealt with by the measurement value acquisition unit 311; the current yaw angle (information regarding the direction of the rotation plane of the rotor 24) stored in the memory unit 318; and the shape data of the blades 23 and the rotation speed of the rotor 24 or the pitch angles of the blades 23 that are stored in the memory unit 318. Here, all the abovementioned parameters are not always used for the calculation of the windmill wake region (the wake region), and it is conceivable that the windmill wake region (the wake region) is calculated on the basis of only at least the wind direction data, the wind speed data, and the current yaw angle (information regarding the direction of the rotation plane of the rotor 24). Alternatively, it is conceivable that the windmill wake region (the wake region) is calculated on the basis of only the wind direction data.

The position judgment unit 314 accesses the memory unit 318 via the internal bus 319, and judges whether there is a wind power generation apparatus 2c into which a windmill wake partially flows on the basis of the positional information and the areas of the rotation planes of the rotors 24 of the other wind power generation apparatuses (2b to 2d) installed in the wind farm 1 (where the positional information and the areas of the rotation planes of the rotors 24 are read out from the memory unit 318), and the windmill wake region (the wake region) calculated by the windmill wake calculation unit 312. If there is a wind power generation apparatus 2c into which a windmill wake partially flows, the position judgment unit 314 transfers this information to the control determination unit 315 via the internal bus 319. Here, it is conceivable that the judgment whether there is a wind power generation apparatus 2c into which a windmill wake partially flows is made on the basis of only the positional information regarding the other wind power generation apparatuses (2b to 2d) and the windmill wake region (the wake region) calculated by the windmill wake calculation unit 312.

On the basis of information, which is transferred from the position judgment unit 314, regarding the wind power generation apparatus 2c into which the windmill wake partially flows, the control determination unit 315 reads out the positional information regarding the wind power generation apparatus 2c and the area of the rotation plane of the rotor 24 of the wind power generation apparatus 2c from the memory unit 318, and selects one of the wake avoidance control (Fig. 8) and the wake centralization control (Fig. 9) that can more effectively restrain the decrease of the output of the electric power generator 28 (Fig. 1) (the output of the electric power generator of the windward-located wind power generation apparatus 2a).

The yaw angle calculation unit 316 corresponds to the one of the wake avoidance control and the wake centralization control selected by the control determination unit 315, calculates the direction of the rotation plane of the rotor 24 of the windward-located wind power generation apparatus 2a on the basis of the positional information and the area of the rotation plane of the rotor 24 of the wind power generation apparatus 2c into which the windmill wake partially flows (where the positional information and the area of the rotation plane are read out from the memory unit 318), and then the yaw angle calculation unit 316 outputs a yaw angle control command corresponding to the direction of the rotation plane of the rotor 24 to the yaw angle control device 33 via the output I/F.

Next, the operation of the control device 31 will be explained. Fig. 3 is a flowchart showing the process flow of the control device shown in Fig. 2.

As shown in Fig. 3, at step S101, the measurement value acquisition unit 311 acquires the wind direction data and the wind speed data measured by the wind direction/wind speed meter 32 via the input I/F 317a and the internal bus 319, and performs, for example, A/D conversion processing, smoothing processing (noise elimination), normalization processing, or the like on the acquired data. Subsequently, after being dealt with by the measurement value acquisition unit 311, the wind direction data is transferred to the wind direction calculation unit 312 by the measurement value acquisition unit 311 via the internal bus 319.

At step S102, the wind direction calculation unit 312 determines the wind direction of the wind that flows into the rotation plane of the rotor 24 of the windward-located wind power generation apparatus 2a (itself) on the basis of the wind direction data that has been dealt with and transferred by the measurement value acquisition unit 311.

At step S103, the windmill wake calculation unit 312 calculates a windmill wake region (a wake region) on the basis of the wind direction determined by the wind direction calculation unit 312; the wind speed data dealt with by the measurement value acquisition unit 311; the current yaw angle (information regarding the direction of the rotation plane of the rotor 24) stored in the memory unit 318; and the shape data of the blades 23 and the rotation speed of the rotor 24 or the pitch angles of the blades 23 that are stored in the memory unit 318.

At step S104, the position judgment unit 314 accesses the memory unit 318 via the internal bus 319, and judges whether there is a wind power generation apparatus 2c into which a windmill wake partially flows on the basis of the positional information of the other wind power generation apparatuses (2b to 2d) installed in the wind farm 1 (where the positional information of the rotation planes of the rotors 24 is read out from the memory unit 318), and the windmill wake region (the wake region) calculated by the windmill wake calculation unit 312. As a result of the judgment, if there is no wind power generation apparatus 2c into which a windmill wake partially flows, the windward-located wind power generation apparatus 2a controls its yaw angle as usual using the yaw angle control device 33 (Fig. 1) so that the rotation plane of its rotor 24 faces the wind direction squarely, and this processing is ended. On the other hand, if there is a wind power generation apparatus 2c into which the windmill wake partially flows, the flow proceeds to step S105.

At step S105, on the basis of information, which is transferred from the position judgment unit 314, regarding the wind power generation apparatus 2c into which the windmill wake partially flows, the control determination unit 315 reads out the positional information regarding the wind power generation apparatus 2c and the area of the rotation plane of the rotor 24 of the wind power generation apparatus 2c from the memory unit 318, and selects one of the wake avoidance control (Fig. 8) and the wake centralization control (Fig. 9) that canmore effectively restrain the decrease of the output of the electric power generator 28 (Fig. 1) (the output of the electric power generator of the windward-located wind power generation apparatus 2a), and then the control determination unit 315 transfers the selected control to the yaw angle control device 33 via the internal bus 319.

At step S106, the yaw angle calculation unit 316 corresponds to the one of the wake avoidance control and the wake centralization control selected by the control determination unit 315, calculates the direction of the rotation plane of the rotor 24 of the windward-located wind power generation apparatus 2a on the basis of the positional information and the area of the rotation plane of the rotor 24 of the wind power generation apparatus 2c into which the windmill wake partially flows (where the positional information and the area of the rotation plane are read out from the memory unit 318), and then the yaw angle calculation unit 316 outputs a yaw angle control command corresponding to the direction of the rotation plane of the rotor 24 to the yaw angle control device 33 via the output I/F, and this processing is ended.

Furthermore, up to now a small-sized wind farm including two wind power generation apparatuses and a large-sized wind farm including three or more wind power generation apparatuses that are disposed with a predefined distance among them in an offset arrangement have been explained as examples in this embodiment, but the configurations of wind farms to which this embodiment can be applied are not limited to the above two types of wind farms. For example, this embodiment can be applied to a wind farm in which three or more wind power generation apparatuses are disposed with a predefined distance among them in a two-dimensional matrix arrangement in a similar way to the first embodiment.

As described above, according to this embodiment, a wind farm including wind power generation apparatuses the damage degrees of which can be held down and wind power generation apparatuses suitable to be installed in such a wind farm can be provided without introducing a central processing unit for the wind farm and new wind power generation apparatuses having the rotation directions of their blades different from each other.

To put it concretely, according to this embodiment, it becomes possible to prevent an inhomogeneous wind from flowing into the rotation plane of the rotor 24 of a wind power generation apparatus unlike in the case of the wind power generation apparatus 2c by controlling the direction of the rotation plane of the rotor 24 of the windward-located wind power generation apparatus 2a, and the increases of the damage degrees of wind power generation apparatuses installed a wind farm are restrained, so that this embodiment can contribute to the improvement of the reliability of the wind farm. In addition, because it is not necessary to prepare a wind power generation apparatus having a new configuration or parts needed for the new configuration, an ordinary wind power generation apparatus can be easily introduced. Furthermore, because communication with the other wind power generation apparatuses and communication with a central management system that monitors the entirety of the wind farm are unnecessary, each wind power generation apparatus can be easily introduced independently of others in the farm.

### Second Embodiment

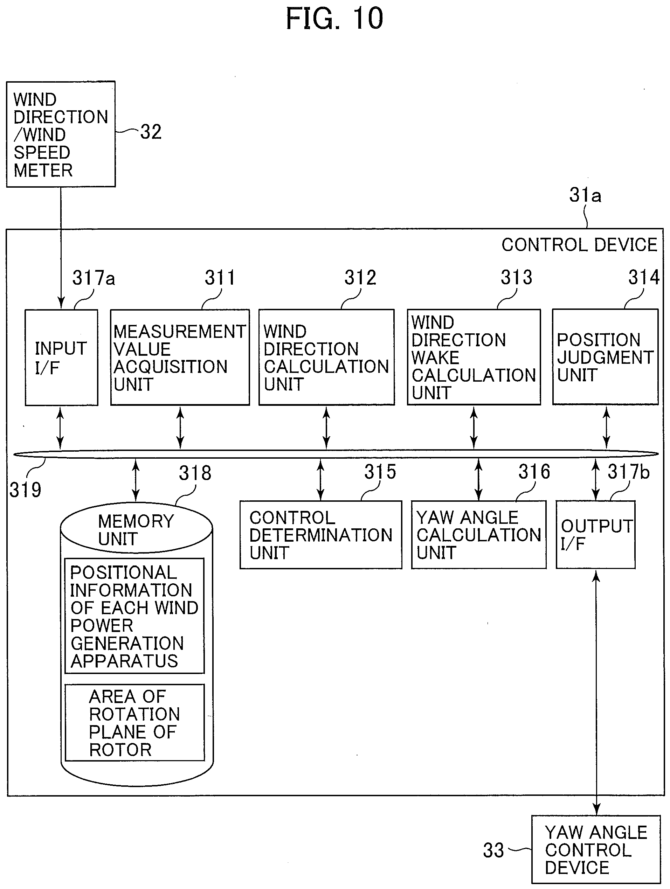

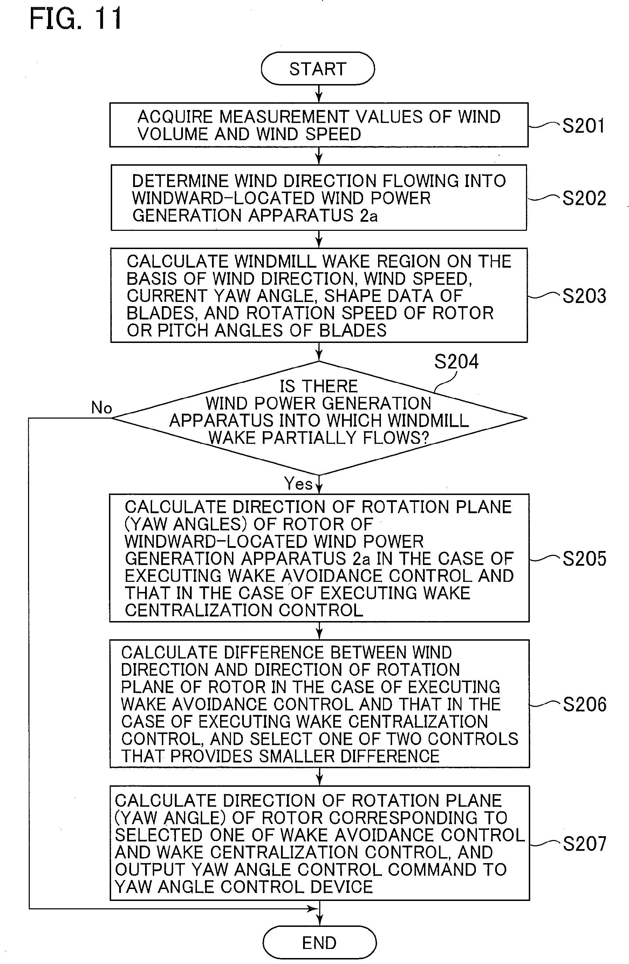

Fig. 10 is the functional block diagram of a control device included in a wind power generation apparatus of a second embodiment according to another example of the present invention, and Fig. 11 is a flowchart showing the process flow of a control device shown in Fig. 10. This embodiment is different from the first embodiment in that this embodiment is configured in such a way that the control device of this embodiment can select one of wake avoidance control and wake centralization control so that the difference between the direction of the rotation plane of the rotor 24 of a windward-located wind power generation apparatus 2a and the wind direction of the wind becomes smaller. Components that are the same as those used in the first embodiment will be given the same reference signs as reference signs used in the first embodiment, and explanations about them that have already been made in the first embodiment will be omitted.

Although a control device 31a that will be described below is installed in each of all wind power generation apparatuses (2a to 2d) installed in a wind farm 1, an operation shown in the after-described flowchart in Fig. 11 is performed in a windward-located wind power generation apparatus 2. In other words, as in the case with the above-described first embodiment, the operation is performed in the windward-located wind power generation apparatus 2a that is installed in a small-sized wind farm 1 shown in Fig. 5 or in a large-sized wind farm 1 shown in Fig. 6.

As shown in Fig. 10, the control device 31a installed in the windward-located wind power generation apparatus 2a includes: a measurement value acquisition unit 311; a wind direction calculation unit 312; a windmill wake calculation unit 313; a position judgment unit 314; a control determination unit 315; a yaw angle calculation unit 316; an input I/F 317a; an output I/F 317b; and a memory unit 318, and these devices are accessibly connected to each other via an internal bus 319. The measurement value acquisition unit 311, the wind direction calculation unit 312, the windmill wake calculation unit 313, the position judgment unit 314, the control determination unit 315, and the yaw angle calculation unit 316 are realized, for example, by a processor such as a not-shown CPU (Central Processing Unit), a ROM that stores various programs, a RAM that temporarily stores data in the middle of calculation, and a memory device such as an external memory device, and at the same time, the processor such as the CPU reads out and executes the various programs stored in the ROM, and stores calculation results that are obtained as execution results in the RAM or in the external memory device. Here, although the abovementioned units are obtained after being divided into the individual functional blocks for an easy understanding of the explanation, the wind direction calculation unit 312, the windmill wake calculation unit 313, the position judgment unit 314, the control determination unit 315, and the yaw angle calculation unit 316 can be integrated into one calculation unit, or these desired individual functional blocks can be integrated into one configuration.

The measurement value acquisition unit 311 acquires wind direction data and wind speed data measured by a wind direction/wind speed meter 32 via the input I/F 317a and the internal bus 319, and performs, for example, A/D conversion processing, smoothing processing (noise elimination), normalization processing, or the like on the acquired data.

The memory unit 318 stores at least the positional information and the area of the rotation plane of the rotor 24 of its own (of the windward-located wind power generation apparatus 2a) in the wind farm 1, and the positional information and the areas of the rotation planes of the rotors 24 of other wind power generation apparatuses (2b to 2d) installed in the wind farm 1. Here, it will be assumed that the area of the rotation plane of a rotor 24 is, for example, the area of the rotation plane of the rotor 24 viewed squarely with the relevant yaw angle 0° plus the area of the relevant tower 20. In addition, the memory unit 318 further stores the current yaw angle of itself (the windward-located wind power generation apparatus 2a), that is to say, information regarding the direction of the rotation plane of the relevant rotor 24, the shape data of the relevant blades 23, and the rotation speed of the rotor 24 or the pitch angles of the blades 23.

The wind direction calculation unit 312 acquires the wind direction data dealt with by the measurement value acquisition unit 311 via the internal bus 319, and determines the wind direction of the wind flowing into the rotation plane of the rotor 24 of itself (the windward-located wind power generation apparatus 2a).

The windmill wake calculation unit 312 calculates a windmill wake region (a wake region) on the basis of, for example, the wind direction determined by the wind direction calculation unit 312; the wind speed data dealt with by the measurement value acquisition unit 311; the current yaw angle (information regarding the direction of the rotation plane of the rotor 24) stored in the memory unit 318; and the shape data of the blades 23 and the rotation speed of the rotor 24 or the pitch angles of the blades 23 that are stored in the memory unit 318. Here, all the abovementioned parameters are not always used for the calculation of the windmill wake region (the wake region), and it is conceivable that the windmill wake region (the wake region) is calculated on the basis of only at least the wind direction data, the wind speed data, and the current yaw angle (information regarding the direction of the rotation plane of the rotor 24). Alternatively, it is conceivable that the windmill wake region (the wake region) is calculated on the basis of only the wind direction data.

The position judgment unit 314 accesses the memory unit 318 via the internal bus 319, and judges whether there is a wind power generation apparatus 2c into which a windmill wake partially flows on the basis of the positional information and the areas of the rotation planes of the rotors 24 of the other wind power generation apparatuses (2b to 2d) installed in the wind farm 1 (where the positional information and the areas of the rotation planes of the rotors 24 are read out from the memory unit 318), and the windmill wake region (the wake region) calculated by the windmill wake calculation unit 312. If there is a wind power generation apparatus 2c into which a windmill wake partially flows, the position judgment unit 314 transfers this information to the control determination unit 315 via the internal bus 319. Here, it is conceivable that the judgment whether there is a wind power generation apparatus 2c into which a windmill wake partially flows is made on the basis of only the positional information regarding the other wind power generation apparatuses (2b to 2d) and the windmill wake region (the wake region) calculated by the windmill wake calculation unit 312.

The yaw angle calculation unit 316 calculates the direction of the rotation plane (yaw angle) of the rotor 24 of the windward-located wind power generation apparatus 2a in the case of executing the wake avoidance control (Fig. 8) and that in the case of executing the wake centralization control (Fig. 9) respectively, and transfers these calculation results to the control unit 315 via the internal bus 319. Here, the direction of the rotation plane (yaw angle) of the rotor 24 of the windward-located wind power generation apparatus 2a is calculated on the basis of the positional information and the area of the rotation plane of the rotor 24 of the wind power generation apparatus 2c into which a windmill wake partially flows, where the positional information and the area of the rotation plane are read out from the memory unit 318. In addition, the yaw angle calculation unit 316 outputs the direction of the rotation plane (yaw angle) of the rotor 24 of the wind power generation apparatus 2a that corresponds to the one of the wake avoidance control (Fig. 8) and the wake centralization control (Fig. 9) selected by the after-mentioned control determination unit 315 to a yaw angle control device 33 as a yaw angle control command via the output I/F.

The control determination unit 315 calculates the difference between the direction of the rotation plane (yaw angle) of the rotor 24 of the windward-located wind power generation apparatus 2a, which is selected by the yaw angle calculation unit 316, in the case of executing the wake avoidance control (Fig. 8) and the wind direction of the wind flowing into the rotation plane of the rotor 24 of itself (the windward-located wind power generation apparatus 2a) that is determined by the wind direction calculation unit 312. Furthermore, in a similar way, the control determination unit 315 calculates the difference between the direction of the rotation plane (yaw angle) of the rotor 24 of the windward-located wind power generation apparatus 2a in the case of executing the wake centralization control (Fig. 9) and the wind direction of the wind flowing into the rotation plane of the rotor 24 of itself (the windward-located wind power generation apparatus 2a) that is determined by the wind direction calculation unit 312. Subsequently, the control determination unit 315 selects one of the wake avoidance control (Fig. 8) and the wake centralization control (Fig. 9) that provides the smaller difference, and transfers the selected control to the yaw angle calculation unit 316.

Next, the operation of the control device 31a will be explained.

As shown in Fig. 11, at step S201, the measurement value acquisition unit 311 acquires wind direction data and wind speed data measured by the wind direction/wind speed meter 32 via the input I/F 317a and the internal bus 319, and performs, for example, A/D conversion processing, smoothing processing (noise elimination), normalization processing, or the like on the acquired data. Subsequently, after being dealt with by the measurement value acquisition unit 311, the wind direction data is transferred to the wind direction calculation unit 312 via the internal bus 319.

At step S202, the wind direction calculation unit 312 determines the wind direction of the wind that flows into the rotation plane of the rotor 24 of the windward-located wind power generation apparatus 2a (itself) on the basis of the wind direction data that has been dealt with and transferred by the measurement value acquisition unit 311.

At step S203, the windmill wake calculation unit 312 calculates a windmill wake region (a wake region) on the basis of the wind direction determined by the wind direction calculation unit 312; the wind speed data dealt with by the measurement value acquisition unit 311; the current yaw angle (information regarding the direction of the rotation plane of the rotor 24) stored in the memory unit 318; the shape data of the blades 23 and the rotation speed of the rotor 24 or the pitch angles of the blades 23 that are stored in the memory unit 318.

At step S204, the position judgment unit 314 accesses the memory unit 318 via the internal bus 319, and judges whether there is a wind power generation apparatus 2c into which a windmill wake partially flows on the basis of the positional information of the other wind power generation apparatuses (2b to 2d) installed in the wind farm 1 (where the positional information is read out from the memory unit 318), and the windmill wake region (the wake region) calculated by the windmill wake calculation unit 312. As a result of the judgment, if there is no wind power generation apparatus 2c into which a windmill wake partially flows, the windward-located wind power generation apparatus 2a controls its yaw angle as usual using the yaw angle control device 33 (Fig. 1) so that the rotation plane of its rotor 24 faces the wind direction squarely, and this processing is ended. On the other hand, if there is a wind power generation apparatus 2c into which the windmill wake partially flows, the flow proceeds to step S205.

At step 205, the yaw angle calculation unit 316 calculates the direction of the rotation plane (yaw angle) of the rotor 24 of the windward-located wind power generation apparatus 2a in the case of executing the wake avoidance control (Fig. 8) and that in the case of executing the wake centralization control (Fig. 9) respectively, and transfers these calculation results to the control unit 315 via the internal bus 319.

At step S206, the control determination unit 315 calculates the difference between the direction of the rotation plane (yaw angle) of the rotor 24 of the windward-located wind power generation apparatus 2a, which is selected by the yaw angle calculation unit 316, in the case of executing the wake avoidance control (Fig. 8) and the wind direction of the wind flowing into the rotation plane of the rotor 24 of itself (the windward-located wind power generation apparatus 2a) that is determined by the wind direction calculation unit 312. Furthermore, in a similar way, the control determination unit 315 calculates the difference between the direction of the rotation plane (yaw angle) of the rotor 24 of the windward-located wind power generation apparatus 2a in the case of executing the wake centralization control (Fig. 9) and the wind direction flowing into the rotation plane of the rotor 24 of itself (the windward-located wind power generation apparatus 2a) that is determined by the wind direction calculation unit 312. Subsequently, the control determination unit 315 selects the wake avoidance control (Fig. 8) or the wake centralization control (Fig. 9) that provides the smaller difference, and transfers the selected control to the yaw angle calculation unit 316.

At step S207, the yaw angle calculation unit 316 outputs the direction of the rotation plane (yaw angle) of the rotor 24 of the windward-located wind power generation apparatus 2a that corresponds to the wake avoidance control (Fig. 8) or the wake centralization control (Fig. 9) selected by the control determination unit 315 to the yaw angle control device 33 as a yaw angle control command via the output I/F, and this processing is ended.

As described above, according to this embodiment, in addition to the advantageous effects brought about by the first embodiment, not only the increase of the damage degree of a wind power generation apparatus 2c that is partially affected by a windmill wake but also the increase of the damage degree of the windward-located wind power generation apparatus 2a can be limited to a minimum by making the difference small between the direction of the rotation plane of the rotor 24 of a windward-located wind power generation apparatus 2a and the wind direction of the wind flowing into the windward-located wind power generation apparatus 2a.

### Third Embodiment

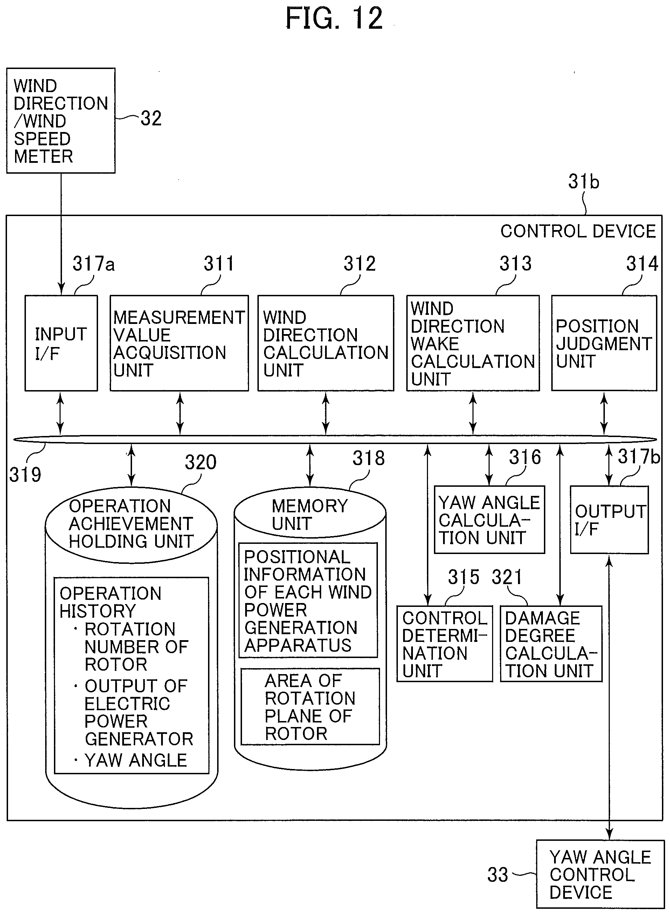

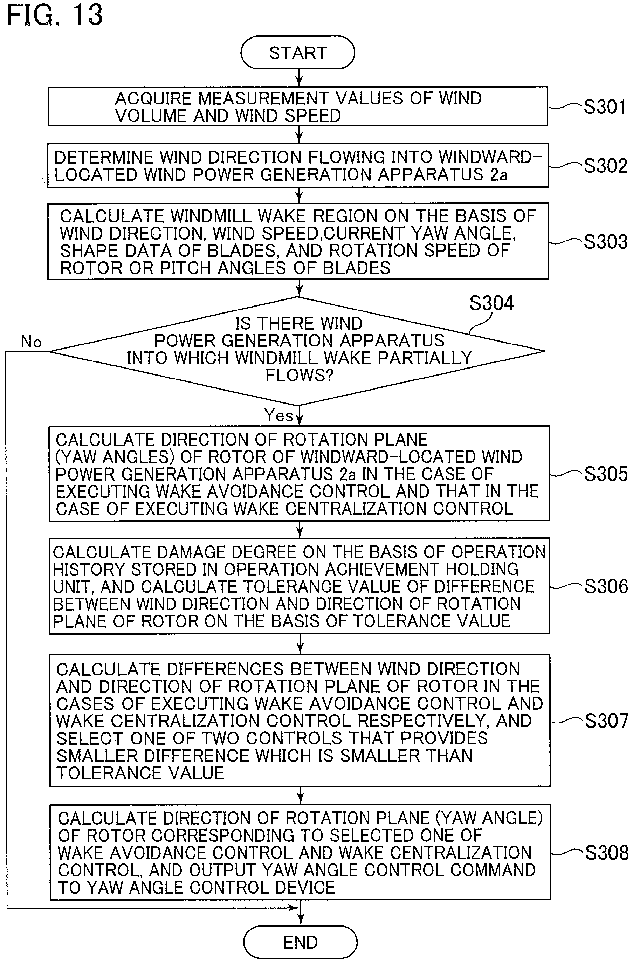

Fig. 12 is the functional block diagram of a control device included in a wind power generation apparatus of a third embodiment according to another example of the present invention, and Fig. 13 is a flowchart showing the process flow of the control device shown in Fig. 12. This embodiment is different from the first embodiment in that, in this embodiment, the control device included in the wind power generation apparatus includes at least an operation achievement holding unit in which the operation history of the wind power generation apparatus is stored and a damage degree calculation unit, and the control device selects one of wake avoidance control and wake centralization control on the basis of a damage degree that is accumulated in a windward-located wind power generation apparatus and calculated by the damage degree calculation unit using the operation history. Components that are the same as those used in the first embodiment will be given the same reference signs as reference signs used in the first embodiment, and explanations about them that have already been made in the first embodiment will be omitted.

Although a control device 31b that will be described below is installed in each of all wind power generation apparatuses (2a to 2d) installed in a wind farm 1, an operation shown in an after-mentioned flowchart in Fig. 11 is performed in the windward-located wind power generation apparatus 2. In other words, as is the case with the above-described first embodiment, the operation is performed in the windward-located wind power generation apparatus 2a that is installed in a small-sized wind farm 1 shown in Fig. 5 or in a large-sized wind farm 1 shown in Fig. 6.

As shown in Fig. 12, the control device 31b installed in the windward-located wind power generation apparatus 2a includes: a measurement value acquisition unit 311; a wind direction calculation unit 312; a windmill wake calculation unit 313; a position judgment unit 314; a control determination unit 315; a yaw angle calculation unit 316; an input I/F 317a; an output I/F 317b; a memory unit 318; an operation achievement holding unit 320; and a damage degree calculation unit 321, and these devices are accessibly connected to each other via an internal bus 319. The measurement value acquisition unit 311, the wind direction calculation unit 312, the windmill wake calculation unit 313, the position judgment unit 314, the control determination unit 315, the yaw angle calculation unit 316, and the damage degree calculation unit 321 are realized, for example, by a processor such as a not-shown CPU (Central Processing Unit), a ROM that stores various programs, a RAM that temporarily stores data in the middle of calculation, and a memory device such as an external memory device, and at the same time, the processor such as the CPU reads out and executes the various programs stored in the ROM, and stores calculation results that are obtained as execution results in the RAM or in the external memory device. Here, although the abovementioned units are obtained after being divided into the individual functional blocks for an easy understanding of the explanation, the wind direction calculation unit 312, the windmill wake calculation unit 313, the position judgment unit 314, the control determination unit 315, the yaw angle calculation unit 316, and the damage degree calculation unit 321 can be integrated into one calculation unit, or these desired individual functional blocks can be integrated into one configuration.

The measurement value acquisition unit 311 acquires wind direction data and wind speed data measured by a wind direction/wind speed meter 32 via the input I/F 317a and the internal bus 319, and performs, for example, A/D conversion processing, smoothing processing (noise elimination), normalization processing, or the like on the acquired data.

The memory unit 318 stores at least the positional information and the area of the rotation plane of the rotor 24 of its own (of the windward-located wind power generation apparatus 2a) in the wind farm 1, and the positional information and the areas of the rotation planes of the rotors 24 of other wind power generation apparatuses (2b to 2d) installed in the wind farm 1. Here, it will be assumed that the area of the rotation plane of a rotor 24 is, for example, the area of the rotation plane of the rotor 24 viewed squarely with the relevant yaw angle 0° plus the area of the relevant tower 20. In addition, the memory unit 318 further stores the current yaw angle of itself (the windward-located wind power generation apparatus 2a), that is to say, information regarding the direction of the rotation plane of the relevant rotor 24, the shape data of the relevant blades 23, and the rotation speed of the rotor 24 or the pitch angles of the blades 23. The operation achievement holding unit 320 stores operation data from past to present, for example, such as an operation history including the rotation number of the rotor 24, the output of an electric power generator 28, and the yaw angle. In addition, it is preferable that, data measured in the wind power generation apparatus such as a wind condition and a distortion is included as data stored in the operation achievement holding unit 320 as well as the above operation history. Here, data regarding the distortion of a blade 23 to be stored is measured, for example, by a distortion sensor, a distortion gauge, or the like that is installed at the base of the blade 23 or the like. Here, loads added to the blade 23 are calculated on the basis of a measured value obtained from the distortion sensor installed at the base of the blade 23 or the like. In the calculation of the loads added to the blade 23, not only the load added to the base of the blade 23 but also a load added to the apical end or to an arbitrary position of the blade 23 can be estimated on the basis of the measured value obtained from the abovementioned distortion sensor.

The wind direction calculation unit 312 acquires the wind direction data dealt with by the measurement value acquisition unit 311 via the internal bus 319, and determines the wind direction of the wind flowing into the rotation plane of the rotor 24 of itself (the windward-located wind power generation apparatus 2a).

The windmill wake calculation unit 312 calculates a windmill wake region (a wake region) on the basis of, for example, the wind direction determined by the wind direction calculation unit 312; the wind speed data dealt with by the measurement value acquisition unit 311; the current yaw angle (information regarding the direction of the rotation plane of the rotor 24) stored in the memory unit 318; and the shape data of the blades 23 and the rotation speed of the rotor 24 or the pitch angles of the blades 23 that are stored in the memory unit 318. Here, all the abovementioned parameters are not always used for the calculation of the windmill wake region (the wake region), and it is conceivable that the windmill wake region (the wake region) is calculated on the basis of only at least the wind direction data, the wind speed data, and the current yaw angle (information regarding the direction of the rotation plane of the rotor 24). Alternatively, it is conceivable that the windmill wake region (the wake region) is calculated on the basis of only the wind direction data.

The position judgment unit 314 accesses the memory unit 318 via the internal bus 319, and judges whether there is a wind power generation apparatus 2c into which a windmill wake partially flows on the basis of the positional information and the areas of the rotation planes of the rotors 24 of the other wind power generation apparatuses (2b to 2d) installed in the wind farm 1 (where the positional information and the areas of the rotation planes of the rotors 24 are read out from the memory unit 318), and the windmill wake region (the wake region) calculated by the windmill wake calculation unit 312. If there is a wind power generation apparatus 2c into which a windmill wake partially flows, the position judgment unit 314 transfers this information to the control determination unit 315 via the internal bus 319. Here, it is conceivable that the judgment whether there is a wind power generation apparatus 2c into which a windmill wake partially flows is made on the basis of only the positional information regarding the other wind power generation apparatuses (2b to 2d) and the windmill wake region (the wake region) calculated by the windmill wake calculation unit 312.

The yaw angle calculation unit 316 calculates the direction of the rotation plane (yaw angle) of the rotor 24 of the windward-located wind power generation apparatus 2a in the case of executing the wake avoidance control (Fig. 8) and that in the case of executing the wake centralization control (Fig. 9) respectively, and transfers these calculation results to the control unit 315 via the internal bus 319. Here, the direction of the rotation plane (yaw angle) of the rotor 24 of the windward-located wind power generation apparatus 2a is calculated on the basis of the positional information and the area of the rotation plane of the rotor 24 of the wind power generation apparatus 2c into which a windmill wake partially flows, where the positional information and the area of the rotation plane are read out from the memory unit 318. In addition, the yaw angle calculation unit 316 outputs the direction of the rotation plane (yaw angle) of the rotor 24 of the wind power generation apparatus 2a that corresponds to the one of the wake avoidance control (Fig. 8) and the wake centralization control (Fig. 9) selected by the after-mentioned control determination unit 315 to a yaw angle control device 33 as a yaw angle control command via the output I/F.

The damage degree calculation unit 321 calculates a damage degree accumulated in the windward-located wind power generation apparatus 2a on the basis of the operation data of the windward-located wind power generation apparatus 2a from past to present, which is stored in the operation achievement holding unit 320, for example, such as the operation history including the rotation number of the rotor 24, the output of the electric power generator 28, and the yaw angle of the windward-located wind power generation apparatus 2a. The damage degree calculation unit 321 calculates the tolerance value of the difference between the wind direction determined by the wind direction calculation unit 312 and the direction of the rotation plane of the rotor 24 on the basis of the calculated damage degree accumulated in the windward-located wind power generation apparatus 2a, and transfers the calculated tolerance value to the control determination unit 315 via the internal bus 319.

The control determination unit 315 calculates the difference between the direction of the rotation plane (yaw angle) of the rotor 24 of the windward-located wind power generation apparatus 2a, which is selected by the yaw angle calculation unit 316, in the case of executing the wake avoidance control (Fig. 8) and the wind direction of the wind flowing into the rotation plane of the rotor 24 of itself (the windward-located wind power generation apparatus 2a) that is determined by the wind direction calculation unit 312. Furthermore, in a similar way, the control determination unit 315 calculates the difference between the direction of the rotation plane (yaw angle) of the rotor 24 of the windward-located wind power generation apparatus 2a in the case of executing the wake centralization control (Fig. 9) and the wind direction of the wind flowing into the rotation plane of the rotor 24 of itself (the windward-located wind power generation apparatus 2a) that is determined by the wind direction calculation unit 312. Subsequently, the control determination unit 315 compares these differences and the tolerance value transferred from the damage degree calculation unit 321 with each other, selects one of the wake avoidance control (Fig. 8) and the wake centralization control (Fig. 9) that provides the smaller difference which is smaller than the tolerance value, and transfers the selected control to the yaw angle calculation unit 316 via the internal bus 319.

Next, the operation of the control device 31b will be explained.

As shown in Fig. 13, at step S301, the measurement value acquisition unit 311 acquires wind direction data and wind speed data measured by the wind direction/wind speed meter 32 via the input I/F 317a and the internal bus 319, and performs, for example, A/D conversion processing, smoothing processing (noise elimination), normalization processing, or the like on the acquired data. Subsequently, after being dealt with by the measurement value acquisition unit 311, the wind direction data is transferred to the wind direction calculation unit 312 by the measurement value acquisition unit 311 via the internal bus 319.

At step S302, the wind direction calculation unit 312 determines the wind direction of the wind that flows into the rotation plane of the rotor 24 of the windward-located wind power generation apparatus 2a (itself) on the basis of the wind direction data that has been dealt with and transferred by the measurement value acquisition unit 311.

At step S303, the windmill wake calculation unit 312 calculates a windmill wake region (a wake region) on the basis of the wind direction determined by the wind direction calculation unit 312; the wind speed data dealt with by the measurement value acquisition unit 311; the current yaw angle (information regarding the direction of the rotation plane of the rotor 24) stored in the memory unit 318; and the shape data of the blades 23 and the rotation speed of the rotor 24 or the pitch angles of the blades 23 that are stored in the memory unit 318.

At step S304, the position judgment unit 314 accesses the memory unit 318 via the internal bus 319, and judges whether there is a wind power generation apparatus 2c into which a windmill wake partially flows on the basis of the positional information of the other wind power generation apparatuses (2b to 2d) installed in the wind farm 1 (where the positional information is read out from the memory unit 318), and the windmill wake region (the wake region) calculated by the windmill wake calculation unit 312. As a result of the judgment, if there is no wind power generation apparatus 2c into which a windmill wake partially flows, the windward-located wind power generation apparatus 2a controls its yaw angle as usual using the yaw angle control device 33 (Fig. 1) so that the rotation plane of its rotor 24 faces the wind direction squarely, and this processing is ended. On the other hand, if, as a result of the judgment, there is a wind power generation apparatus 2c into which the windmill wake partially flows, the flow proceeds to step S305.

At step S305, the yaw angle calculation unit 316 calculates the direction of the rotation plane (yaw angle) of the rotor 24 of the windward-located wind power generation apparatus 2a in the case of executing the wake avoidance control (Fig. 8) and that in the case of executing the wake centralization control (Fig. 9) respectively, and transfers these calculation results to the control unit 315 via the internal bus 319.

At step S306, the damage degree calculation unit 321 calculates a damage degree accumulated in the windward-located wind power generation apparatus 2a on the basis of the operation data of the windward-located wind power generation apparatus 2a from past to present, which are stored in the operation achievement holding unit 320, for example, such as the operation history including the rotation number of the rotor 24, the output of the electric power generator 28, and the yaw angle of the windward-located wind power generation apparatus 2a. Subsequently, the damage degree calculation unit 321 calculates the tolerance value of the difference between the wind direction determined by the wind direction calculation unit 312 and the direction of the rotation plane of the rotor 24 on the basis of the calculated damage degree accumulated in the windward-located wind power generation apparatus 2a, and transfers the calculated tolerance value to the control determination unit 315 via the internal bus 319.

At step S307, the control determination unit 315 calculates the difference between the direction of the rotation plane (yaw angle) of the rotor 24 of the windward-located wind power generation apparatus 2a, which is selected by the yaw angle calculation unit 316, in the case of executing the wake avoidance control (Fig. 8) and the wind direction of the wind flowing into the rotation plane of the rotor 24 of itself (the windward-located wind power generation apparatus 2a) that is determined by the wind direction calculation unit 312. Furthermore, in a similar way, the control determination unit 315 calculates the difference between the direction of the rotation plane (yaw angle) of the rotor 24 of the windward-located wind power generation apparatus 2a in the case of executing the wake centralization control (Fig. 9) and the wind direction of the wind flowing into the rotation plane of the rotor 24 of itself (the windward-located wind power generation apparatus 2a) that is determined by the wind direction calculation unit 312. Subsequently, the control determination unit 315 compares these differences with the tolerance value transferred from the damage degree calculation unit 321, selects one of the wake avoidance control (Fig. 8) and the wake centralization control (Fig. 9) that provides the smaller difference which is smaller than the tolerance value, and transfers the selected control to the yaw angle calculation unit 316 via the internal bus 319.

At step S308, the yaw angle calculation unit 316 outputs the direction of the rotation plane (yaw angle) of the rotor 24 of the windward-located wind power generation apparatus 2a that corresponds to the one of the wake avoidance control (Fig. 8) and the wake centralization control (Fig. 9) selected by the control determination unit 315 to the yaw angle control device 33 as a yaw angle control command via the output I/F, and this processing is ended.

As described above, according to this embodiment, in addition to the advantageous effects brought about by the first embodiment, the increases of the damage degrees of the surrounding wind power generation apparatuses (2b to 2d) can be avoided while the reliability of the windward-located wind power generation apparatus 2a is being secured.

### Fourth Embodiment

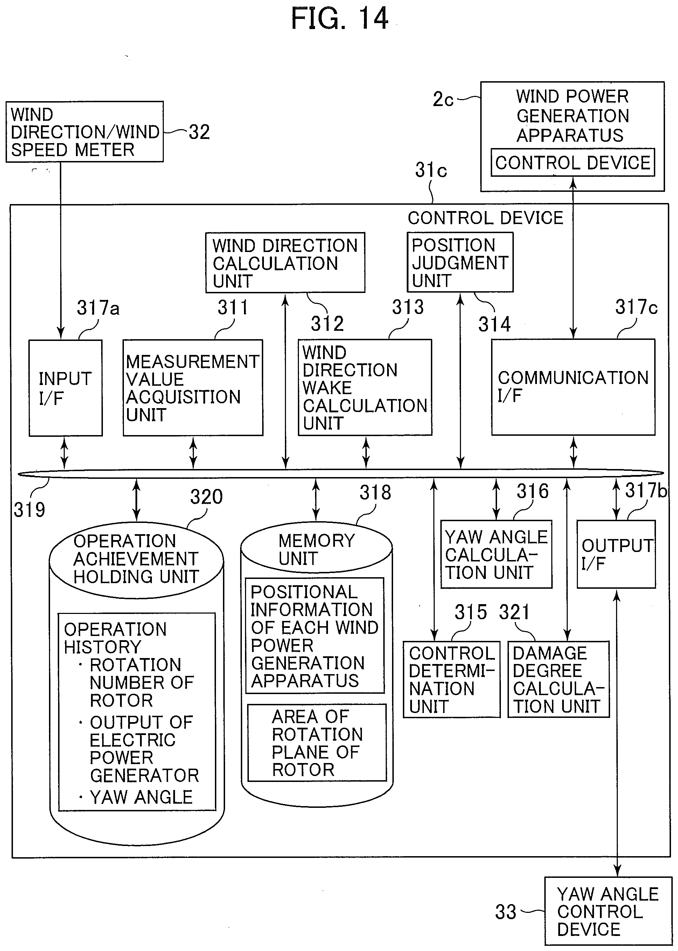

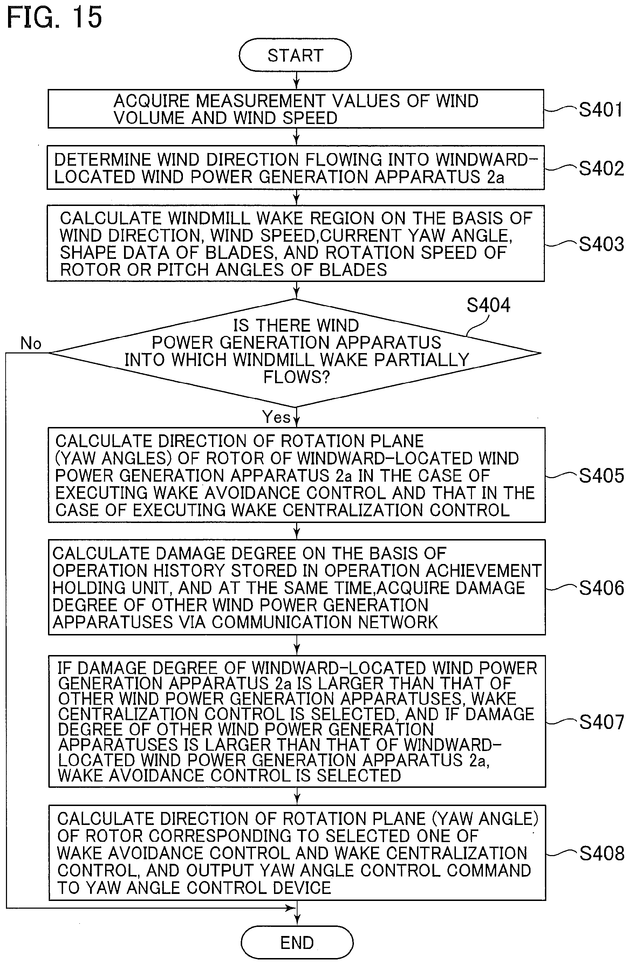

Fig. 14 is the functional block diagram of a control device included in a wind power generation apparatus of a fourth embodiment according to another example of the present invention, and Fig. 15 is a flowchart showing the process flow of the control device shown in Fig. 14. This embodiment is different from the first embodiment in that, in this embodiment, the control device included in the wind power generation apparatus includes at least an operation achievement holding unit in which information including the operation history of the wind power generation apparatus is stored, a damage degree calculation unit, and a communication I/F, and the control device selects one of wake avoidance control and wake centralization control on the basis of a damage degree that is accumulated in a windward-located wind power generation apparatus and calculated by the damage degree calculation unit using the operation history and the damage degrees of other wind power generation apparatuses obtained via the communication I/F. Components that are the same as those used in the first embodiment will be given the same reference signs as reference signs used in the first embodiment, and explanations about them that have already been made in the first embodiment will be omitted.

Although a control device 31c that will be described below is installed in each of all wind power generation apparatuses (2a to 2d) installed in a wind farm 1, an operation shown in an after-mentioned flowchart in Fig. 15 is performed in a windward-located wind power generation apparatus 2. In other words, as is the case with the above-described first embodiment, the operation is performed in the windward-located wind power generation apparatus 2a that is installed in a small-sized wind farm 1 shown in Fig. 5 or in a large-sized wind farm 1 shown in Fig. 6.

As shown in Fig. 14, the control device 31c installed in the windward-located wind power generation apparatus 2a includes: a measurement value acquisition unit 311; a wind direction calculation unit 312; a windmill wake calculation unit 313; a position judgment unit 314; a control determination unit 315; a yaw angle calculation unit 316; an input I/F 317a; an output I/F 317b; a memory unit 318; an operation achievement holding unit 320; a damage degree calculation unit 321, and a communication I/F 317c, and these devices are accessibly connected to each other via an internal bus 319. The measurement value acquisition unit 311, the wind direction calculation unit 312, the windmill wake calculation unit 313, the position judgment unit 314, the control determination unit 315, the yaw angle calculation unit 316, and the damage degree calculation unit 321 are realized, for example, by a processor such as a not-shown CPU (Central Processing Unit), a ROM that stores various programs, a RAM that temporarily stores data in the middle of calculation, and a memory device such as an external memory device, and at the same time, the processor such as the CPU reads out and executes the various programs stored in the ROM, and stores calculation results that are obtained as execution results in the RAM or in the external memory device. Here, although the abovementioned units are obtained after being divided into the individual functional blocks for an easy understanding of the explanation, the wind direction calculation unit 312, the windmill wake calculation unit 313, the position judgment unit 314, the control determination unit 315, the yaw angle calculation unit 316, and the damage degree calculation unit 321 can be integrated into one calculation unit, or these desired individual functional blocks can be integrated into one configuration. Here, the communication I/F 317c is configured to be able to communicate with the control devices of the other wind power generation devices via a communication network (regardless of whether it is wired or wireless). In an example shown in Fig. 14, the communication I/F 317c is connected to the control device of the wind power generation apparatus 2c as an example, and the control device 31c of the windward-located wind power generation apparatus 2a is configured to be able to acquire the damage degree of the wind power generation apparatus 2c via the communication I/F 317c.

The measurement value acquisition unit 311 acquires wind direction data and wind speed data measured by a wind direction/wind speed meter 32 via the input I/F 317a and the internal bus 319, and performs, for example, A/D conversion processing, smoothing processing (noise elimination), normalization processing, or the like on the acquired data.

The memory unit 318 stores at least the positional information and the area of the rotation plane of the rotor 24 of its own (of the windward-located wind power generation apparatus 2a) in the wind farm 1, and the positional information and the areas of the rotation planes of the rotors 24 of other wind power generation apparatuses (2b to 2d) installed in the wind farm 1. Here, it will be assumed that the area of the rotation plane of a rotor 24 is, for example, the area of the rotation plane of the rotor 24 viewed squarely with the relevant yaw angle 0° plus the area of the relevant tower 20. In addition, the memory unit 318 further stores the current yaw angle of itself (the windward-located wind power generation apparatus 2a), that is to say, information regarding the direction of the rotation plane of the relevant rotor 24, the shape data of the relevant blades 23, and the rotation speed of the rotor 24 or the pitch angles of the blades 23.

The operation achievement holding unit 320 stores operation data from past to present, for example, such as an operation history including the rotation number of the rotor 24, the output of an electric power generator 28, and the yaw angle. In addition, it is preferable that, data measured in the wind power generation apparatus such as a wind condition and a distortion is included as data stored in the operation achievement holding unit 320 as well as the above operation history. Here, data regarding the distortion of a blade 23 to be stored is measured, for example, by a distortion sensor, a distortion gauge, or the like that is installed at the base of the blade 23 or the like. Here, loads added to the blade 23 are calculated on the basis of a measured value obtained from the distortion sensor installed at the base of the blade 23 or the like. In the calculation of the loads added to the blade 23, not only the load added to the base of the blade 23 but also a load added to the apical end of the blade 23 or to an arbitrary position of the blade 23 can be estimated on the basis of the measured value obtained from the abovementioned distortion sensor.

The wind direction calculation unit 312 acquires the wind direction data dealt with by the measurement value acquisition unit 311 via the internal bus 319, and determines the wind direction of the wind flowing into the rotation plane of the rotor 24 of itself (the windward-located wind power generation apparatus 2a).

The windmill wake calculation unit 312 calculates a windmill wake region (a wake region) on the basis of, for example, the wind direction determined by the wind direction calculation unit 312; the wind speed data dealt with by the measurement value acquisition unit 311; the current yaw angle (information regarding the direction of the rotation plane of the rotor 24) stored in the memory unit 318; and the shape data of the blades 23 and the rotation speed of the rotor 24 or the pitch angles of the blades 23 that are stored in the memory unit 318. Here, all the abovementioned parameters are not always used for the calculation of the windmill wake region (the wake region), and it is conceivable that the windmill wake region (the wake region) is calculated on the basis of only at least the wind direction data, the wind speed data, and the current yaw angle (information regarding the direction of the rotation plane of the rotor 24). Alternatively, it is conceivable that the windmill wake region (the wake region) is calculated on the basis of only the wind direction data.

The position judgment unit 314 accesses the memory unit 318 via the internal bus 319, and judges whether there is a wind power generation apparatus 2c into which a windmill wake partially flows on the basis of the positional information and the areas of the rotation planes of the rotors 24 of the other wind power generation apparatuses (2b to 2d) installed in the wind farm 1 (where the positional information and the areas of the rotation planes of the rotors 24 are read out from the memory unit 318), and the windmill wake region (the wake region) calculated by the windmill wake calculation unit 312. If there is a wind power generation apparatus 2c into which a windmill wake partially flows, the position judgment unit 314 transfers this information to the control determination unit 315 via the internal bus 319. Here, it is conceivable that the judgment whether there is a wind power generation apparatus 2c into which a windmill wake partially flows is made on the basis of only the positional information regarding the other wind power generation apparatuses (2b to 2d) and the windmill wake region (the wake region) calculated by the windmill wake calculation unit 312.

The yaw angle calculation unit 316 calculates the direction of the rotation plane (yaw angle) of the rotor 24 of the windward-located wind power generation apparatus 2a in the case of executing the wake avoidance control (Fig. 8) and that in the case of executing the wake centralization control (Fig. 9) respectively, and transfers these calculation results to the control unit 315 via the internal bus 319. Here, the direction of the rotation plane (yaw angle) of the rotor 24 of the windward-located wind power generation apparatus 2a is calculated on the basis of the positional information and the area of the rotation plane of the rotor 24 of the wind power generation apparatus 2c into which a windmill wake partially flows, where the positional information and the area of the rotation plane are read out from the memory unit 318. In addition, the yaw angle calculation unit 316 outputs the direction of the rotation plane (yaw angle) of the rotor 24 of the wind power generation apparatus 2a that corresponds to the one of the wake avoidance control (Fig. 8) and the wake centralization control (Fig. 9) selected by the after-mentioned control determination unit 315 to a yaw angle control device 33 as a yaw angle control command via the output I/F.

The damage degree calculation unit 321 calculates a damage degree accumulated in the windward-located wind power generation apparatus 2a on the basis of the operation data of the windward-located wind power generation apparatus 2a from past to present, which is stored in the operation achievement holding unit 320, for example, such as the operation history including the rotation number of the rotor 24, the output of the electric power generator 28, and the yaw angle of the windward-located wind power generation apparatus 2a. The damage degree calculation unit 321 acquires the damage degree accumulated in the wind power generation apparatus 2c via the communication I/F 317c, and transfers the calculated damage degree of the windward-located wind power generation apparatus 2a and the acquired damage degree of the wind power generation apparatus 2c to the control determination unit 315 via the internal bus 319.

The control determination unit 315 compares the damage degree of the windward-located wind power generation apparatus 2a transferred from the damage degree calculation unit 321 with the acquired damage degree of the wind power generation apparatus 2c. As a result of the above comparison, if the damage degree of the windward-located wind power generation apparatus 2a (itself) is larger than the damage degree of the wind power generation apparatus 2c, the wake centralization control (Fig. 9) is selected. On the contrary, as a result of the above comparison, if the damage degree of the wind power generation apparatus 2c is larger than the damage degree of the windward-located wind power generation apparatus 2a (itself), the wake avoidance control (Fig. 8) is selected. With such a selection method as this, it becomes possible that one of the control methods of the windward-located wind power generation apparatus 2a (the wake avoidance control and the wake centralization control) is determined so that loads are converged on one of the two wind power generation apparatuses having a smaller damage degree. The control determination unit 315 transfers information regarding the selected one of the wake avoidance control (Fig. 8) and the wake centralization control (Fig. 9) to the yaw angle calculation unit 316 via the internal bus 319.

Next, the operation of the control device 31c will be explained.

As shown in Fig. 15, at step S401, the measurement value acquisition unit 311 acquires wind direction data and wind speed data measured by the wind direction/wind speed meter 32 via the input I/F 317a and the internal bus 319, and performs, for example, A/D conversion processing, smoothing processing (noise elimination), normalization processing, or the like on the acquired data. Subsequently, after being dealt with by the measurement value acquisition unit 311, the wind direction data is transferred to the wind direction calculation unit 312 by the measurement value acquisition unit 311 via the internal bus 319.

At step S402, the wind direction calculation unit 312 determines the wind direction of the wind that flows into the rotation plane of the rotor 24 of the windward-located wind power generation apparatus 2a (itself) on the basis of the wind direction data that has been dealt with and transferred by the measurement value acquisition unit 311. At step S403, the windmill wake calculation unit 312 calculates a windmill wake region (a wake region) on the basis of the wind direction determined by the wind direction calculation unit 312; the wind speed data dealt with by the measurement value acquisition unit 311; the current yaw angle (information regarding the direction of the rotation plane of the rotor 24) stored in the memory unit 318; and the shape data of the blades 23 and the rotation speed of the rotor 24 or the pitch angles of the blades 23 that are stored in the memory unit 318.

At step S404, the position judgment unit 314 accesses the memory unit 318 via the internal bus 319, and judges whether there is a wind power generation apparatus 2c into which a windmill wake partially flows on the basis of the positional information of the other wind power generation apparatuses (2b to 2d) installed in the wind farm 1 (where the positional information is read out from the memory unit 318), and the windmill wake region (the wake region) calculated by the windmill wake calculation unit 312. As a result of the judgment, if there is no wind power generation apparatus 2c into which a windmill wake partially flows, the windward-located wind power generation apparatus 2a controls its yaw angle as usual using the yaw angle control device 33 (Fig. 1) so that the rotation plane of its rotor 24 faces the wind direction squarely, and this processing is ended. On the other hand, if there is a wind power generation apparatus 2c into which the windmill wake partially flows, the flow proceeds to step S405.

At step S405, the yaw angle calculation unit 316 calculates the direction of the rotation plane (yaw angle) of the rotor 24 of the windward-located wind power generation apparatus 2a in the case of executing the wake avoidance control (Fig. 8) and that in the case of executing the wake centralization control (Fig. 9) respectively, and transfers these calculation results to the control unit 315 via the internal bus 319.

At step S406, the damage degree calculation unit 321 calculates a damage degree accumulated in the windward-located wind power generation apparatus 2a on the basis of the operation data of the windward-located wind power generation apparatus 2a from past to present, which are stored in the operation achievement holding unit 320, for example, such as the operation history including the rotation number of the rotor 24, the output of the electric power generator 28, and the yaw angle of the windward-located wind power generation apparatus 2a. Furthermore, the damage degree calculation unit 321 acquires the damage degree accumulated in the wind power generation apparatus 2c into which a windmill wake partially flows via the communication I/F 317c, and transfers the calculated damage degree of the windward-located wind power generation apparatus 2a and the acquired damage degree of the wind power generation apparatus 2c into which a windmill wake partially flows to the control determination unit 315 via the internal bus 319.

At step S407, the control determination unit 315 compares the damage degree of the windward-located wind power generation apparatus 2a transferred from the damage degree calculation unit 321 with the acquired damage degree of the wind power generation apparatus 2c into which a windmill wake partially flows. As a result of the above comparison, if the damage degree of the windward-located wind power generation apparatus 2a (itself) is larger than the damage degree of the wind power generation apparatus 2c into which a windmill wake partially flows, the wake centralization control (Fig. 9) is selected. On the contrary, if, as a result of the above comparison, the damage degree of the wind power generation apparatus 2c into which a windmill wake partially flows is larger than the damage degree of the windward-located wind power generation apparatus 2a (itself), the wake avoidance control (Fig. 8) is selected. The control determination unit 315 transfers information regarding the selected one of the wake avoidance control (Fig. 8) and the wake centralization control (Fig. 9) to the yaw angle calculation unit 316 via the internal bus 319.

At step S408, the yaw angle calculation unit 316 outputs the direction of the rotation plane (yaw angle) of the rotor 24 of the windward-located wind power generation apparatus 2a that corresponds to the one of the wake avoidance control (Fig. 8) and the wake centralization control (Fig. 9) selected by the control determination unit 315 to the yaw angle control device 33 as a yaw angle control command via the output I/F, and this processing is ended.

As described above, according to this embodiment, in addition to the advantageous effects brought about by the first embodiment, the damage degree of a certain wind power generation apparatus is prevented from growing extremely large by preferentially protecting wind power generation apparatuses in which large damage degrees are accumulated, which makes it possible to improve the reliability of the entirety of the relevant wind farm.

### Fifth Embodiment

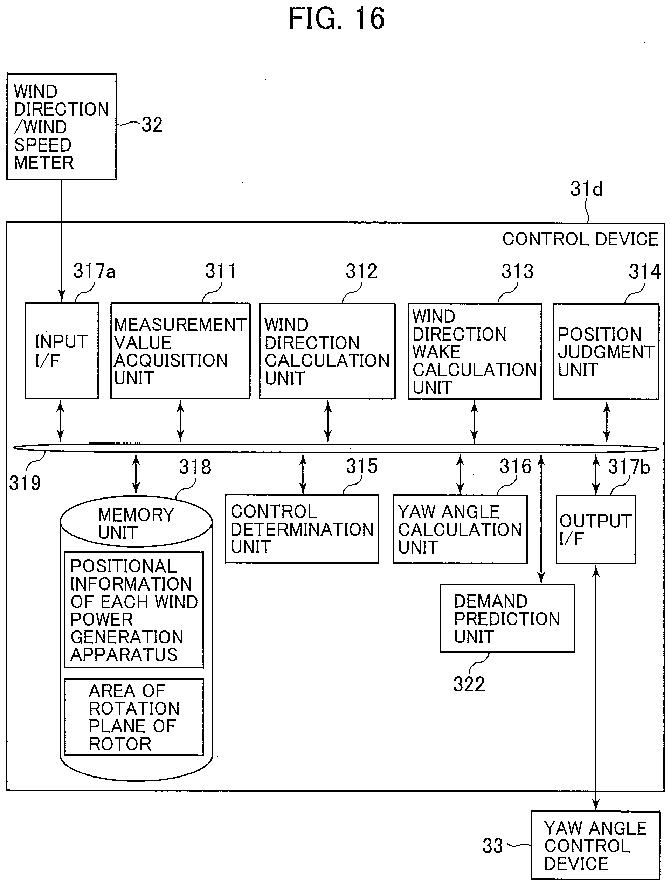

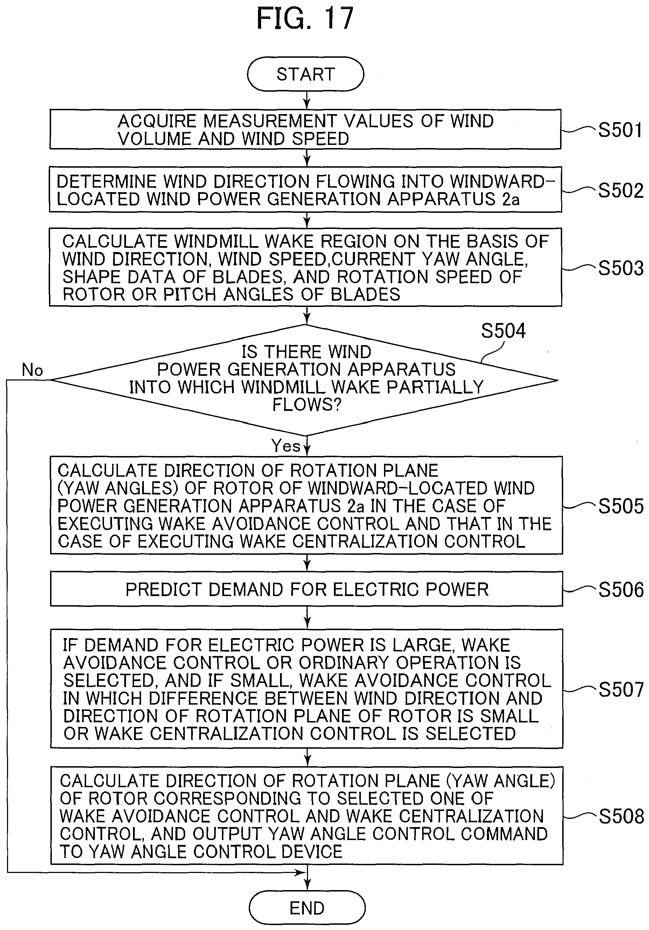

Fig. 16 is the functional block diagram of a control device included in a wind power generation apparatus of a fifth embodiment according to another example of the present invention, and Fig. 17 is a flowchart showing the process flow of the control device shown in Fig. 16. This embodiment is different from the first embodiment in that this embodiment is configured in such a way that the control device of this embodiment includes a demand prediction unit, and the control of a windward-located wind power generation apparatus 2a is adjusted according to a demand for electric power predicted by the demand prediction unit. Components that are the same as those used in the first embodiment will be given the same reference signs as reference signs used in the first embodiment, and explanations about them that have already been made in the first embodiment will be omitted.

Although a control device 31d that will be described below is installed in each of all wind power generation apparatuses (2a to 2d) installed in a wind farm 1, an operation shown in an after-mentioned flowchart in Fig. 17 is performed in a windward-located wind power generation apparatus 2. In other words, as is the case with the above-described first embodiment, the operation is performed in the windward-located wind power generation apparatus 2a that is installed in a small-sized wind farm 1 or in a large-sized wind farm 1.

As shown in Fig. 16, the control device 31d installed in the windward-located wind power generation apparatus 2a includes: a measurement value acquisition unit 311; a wind direction calculation unit 312; a windmill wake calculation unit 313; a position judgment unit 314; a control determination unit 315; a yaw angle calculation unit 316; an input I/F 317a; an output I/F 317b; a memory unit 318; and a demand prediction unit 322, and these devices are accessibly connected to each other via an internal bus 319. The measurement value acquisition unit 311, the wind direction calculation unit 312, the windmill wake calculation unit 313, the position judgment unit 314, the control determination unit 315, the yaw angle calculation unit 316, and the damage prediction unit 322 are realized, for example, by a processor such as a not-shown CPU (Central Processing Unit), a ROM that stores various programs, a RAM that temporarily stores data in the middle of calculation, and a memory device such as an external memory device, and at the same time, the processor such as the CPU reads out and executes the various programs stored in the ROM, and stores calculation results that are obtained as execution results in the RAM or in the external memory device. Here, although the abovementioned units are obtained after being divided into the individual functional blocks for an easy understanding of the explanation, the wind direction calculation unit 312, the windmill wake calculation unit 313, the position judgment unit 314, the control determination unit 315, the yaw angle calculation unit 316, and the demand prediction unit 322 can be integrated into one calculation unit, or these desired individual functional blocks can be integrated into one configuration.

The measurement value acquisition unit 311 acquires wind direction data and wind speed data measured by a wind direction/wind speed meter 32 via the input I/F 317a and the internal bus 319, and performs, for example, A/D conversion processing, smoothing processing (noise elimination), normalization processing, or the like on the acquired data.

The memory unit 318 stores at least the positional information and the area of the rotation plane of the rotor 24 of its own (of the windward-located wind power generation apparatus 2a) in the wind farm 1, and the positional information and the areas of the rotation planes of the rotors 24 of other wind power generation apparatuses (2b to 2d) installed in the wind farm 1. Here, it will be assumed that the area of the rotation plane of a rotor 24 is, for example, the area of the rotation plane of the rotor 24 viewed squarely with the relevant yaw angle 0° plus the area of the relevant tower 20. In addition, the memory unit 318 further stores the current yaw angle of itself (the windward-located wind power generation apparatus 2a), that is to say, information regarding the direction of the rotation plane of the relevant rotor 24, the shape data of the relevant blades 23, and the rotation speed of the rotor 24 or the pitch angles of the blades 23.

The wind direction calculation unit 312 acquires the wind direction data dealt with by the measurement value acquisition unit 311 via the internal bus 319, and determines the wind direction of the wind flowing into the rotation plane of the rotor 24 of itself (the windward-located wind power generation apparatus 2a).

The windmill wake calculation unit 312 calculates a windmill wake region (a wake region) on the basis of, for example, the wind direction determined by the wind direction calculation unit 312; the wind speed data dealt with by the measurement value acquisition unit 311; the current yaw angle (information regarding the direction of the rotation plane of the rotor 24) stored in the memory unit 318; and the shape data of the blades 23 and the rotation speed of the rotor 24 or the pitch angles of the blades 23 that are stored in the memory unit 318. Here, all the abovementioned parameters are not always used for the calculation of the windmill wake region (the wake region), and it is conceivable that the windmill wake region (the wake region) is calculated on the basis of only at least the wind direction data, the wind speed data, and the current yaw angle (information regarding the direction of the rotation plane of the rotor 24). Alternatively, it is conceivable that the windmill wake region (the wake region) is calculated on the basis of only the wind direction data.

The position judgment unit 314 accesses the memory unit 318 via the internal bus 319, and judges whether there is a wind power generation apparatus 2c into which a windmill wake partially flows on the basis of the positional information and the areas of the rotation planes of the rotors 24 of the other wind power generation apparatuses (2b to 2d) installed in the wind farm 1 (where the positional information and the areas of the rotation planes of the rotors 24 are read out from the memory unit 318), and the windmill wake region (the wake region) calculated by the windmill wake calculation unit 312. If there is a wind power generation apparatus 2c into which a windmill wake partially flows, the position judgment unit 314 transfers this information to the control determination unit 315 via the internal bus 319. Here, it is conceivable that the judgment whether there is a wind power generation apparatus 2c into which a windmill wake partially flows is made on the basis of only the positional information regarding the other wind power generation apparatuses (2b to 2d) and the windmill wake region (the wake region) calculated by the windmill wake calculation unit 312.

The yaw angle calculation unit 316 calculates the direction of the rotation plane (yaw angle) of the rotor 24 of the windward-located wind power generation apparatus 2a in the case of executing the wake avoidance control (Fig. 8) and that in the case of executing the wake centralization control (Fig. 9) respectively, and transfers these calculation results to the control unit 315 via the internal bus 319. Here, the direction of the rotation plane (yaw angle) of the rotor 24 of the windward-located wind power generation apparatus 2a is calculated on the basis of the positional information and the area of the rotation plane of the rotor 24 of the wind power generation apparatus 2c into which a windmill wake partially flows, where the positional information and the area of the rotation plane are read out from the memory unit 318. In addition, the yaw angle calculation unit 316 outputs the direction of the rotation plane (yaw angle) of the rotor 24 of the wind power generation apparatus 2a that corresponds to the one of the wake avoidance control (Fig. 8) and the wake centralization control (Fig. 9) selected by the after-mentioned control determination unit 315 to a yaw angle control device 33 as a yaw angle control command via the output I/F.

The demand prediction unit 322 predicts a demand for electric power on the basis of time slots and seasons. To put it concretely, the demand prediction unit 322 predicts that, while the demand is large in the day time, the demand becomes small in the night time. The demand prediction unit 322 transfers the predicted demand for electric power to the control determination unit 315 via the internal bus 319.

If the demand for electric power transferred from the demand prediction unit 322 is large, the control determination unit 315 selects one of the wake avoidance control (Fig. 8) and the continuation of a normal operation, that is to say, the continuation of an operation in which the yaw angle of the windward-located wind power generation apparatus 2a is controlled using the yaw angle control device 33 (Fig. 1) so that the rotation plane of the rotor 24 of the windward-located wind power generation apparatus 2a faces the wind direction of the wind squarely in order to secure generated electric energy. On the other hand, if the demand for electric power transferred from the demand prediction unit 322 is small, the control determination unit 315 calculates the difference between the direction of the rotation plane (yaw angle) of the rotor 24 of the windward-located wind power generation apparatus 2a, which is selected by the yaw angle calculation unit 316, in the case of executing the wake avoidance control (Fig. 8) and the wind direction of the wind flowing into the rotation plane of the rotor 24 of itself (the windward-located wind power generation apparatus 2a) that is determined by the wind direction calculation unit 312. Furthermore, in a similar way, the control determination unit 315 calculates the difference between the direction of the rotation plane (yaw angle) of the rotor 24 of the windward-located wind power generation apparatus 2a in the case of executing the wake centralization control (Fig. 9) and the wind direction of the wind flowing into the rotation plane of the rotor 24 of itself (the windward-located wind power generation apparatus 2a) that is determined by the wind direction calculation unit 312. Subsequently, the control determination unit 315 selects one of the wake avoidance control (Fig. 8) and the wake centralization control (Fig. 9) that provides the smaller difference, and transfers the selected control to the yaw angle calculation unit 316 via the internal bus 319. In other words, the control determination unit 315 gives preference to the increase of generated electric energy over the restraint of the damage degree of the windward-located wind power generation apparatus 2a only in the case where the demand for electric power is large.

Next, the operation of the control device 31d will be explained.

As shown in Fig. 17, at step S501, the measurement value acquisition unit 311 acquires wind direction data and wind speed data measured by the wind direction/wind speed meter 32 via the input I/F 317a and the internal bus 319, and performs, for example, A/D conversion processing, smoothing processing (noise elimination), normalization processing, or the like on the acquired data. Subsequently, after being dealt with by the measurement value acquisition unit 311, the wind direction data is transferred to the wind direction calculation unit 312 by the measurement value acquisition unit 311 via the internal bus 319.

At step S502, the wind direction calculation unit 312 determines the wind direction that flows into the rotation plane of the rotor 24 of the windward-located wind power generation apparatus 2a (itself) on the basis of the wind direction data that has been dealt with and transferred by the measurement value acquisition unit 311.

At step S503, the windmill wake calculation unit 312 calculates a windmill wake region (a wake region) on the basis of the wind direction determined by the wind direction calculation unit 312; the wind speed data dealt with by the measurement value acquisition unit 311; the current yaw angle (information regarding the direction of the rotation plane of the rotor 24) stored in the memory unit 318; and the shape data of the blades 23 and the rotation speed of the rotor 24 or the pitch angles of the blades 23 that are stored in the memory unit 318.

At step S504, the position judgment unit 314 accesses the memory unit 318 via the internal bus 319, and judges whether there is a wind power generation apparatus 2c into which a windmill wake partially flows on the basis of the positional information of the other wind power generation apparatuses (2b to 2d) installed in the wind farm 1 (where the positional information is read out from the memory unit 318), and the windmill wake region (the wake region) calculated by the windmill wake calculation unit 312. As a result of the judgment, if there is no wind power generation apparatus 2c into which a windmill wake partially flows, the windward-located wind power generation apparatus 2a controls its yaw angle as usual using the yaw angle control device 33 (Fig. 1) so that the rotation plane of its rotor 24 faces the wind direction squarely, and this processing is ended. On the other hand, if, as a result of the judgment, there is a wind power generation apparatus 2c into which the windmill wake partially flows, the flow proceeds to step S505.

At step S205, the yaw angle calculation unit 316 calculates the direction of the rotation plane (yaw angle) of the rotor 24 of the windward-located wind power generation apparatus 2a in the case of executing the wake avoidance control (Fig. 8) and that in the case of executing the wake centralization control (Fig. 9) respectively, and transfers these calculation results to the control unit 315 via the internal bus 319.

At step S506, the demand prediction unit 322 predicts a demand for electric power on the basis of time slots and seasons. To put it concretely, the demand prediction unit 322 predicts that, while the demand is large in the day time, the demand becomes small in the night time. The demand prediction unit 322 transfers the predicted demand for electric power to the control determination unit 315 via the internal bus 319.

At step S507, if the demand for electric power transferred from the demand prediction unit 322 is large, the control determination unit 315 selects either of the wake avoidance control (Fig. 8) and the continuation of a normal operation in order to secure generated electric energy. On the other hand, if the demand for electric power transferred from the demand prediction unit 322 is small, the control determination unit 315 calculates the difference between the direction of the rotation plane (yaw angle) of the rotor 24 of the windward-located wind power generation apparatus 2a, which is selected by the yaw angle calculation unit 316, in the case of executing the wake avoidance control (Fig. 8) and the wind direction of the wind flowing into the rotation plane of the rotor 24 of itself (the windward-located wind power generation apparatus 2a) that is determined by the wind direction calculation unit 312. Furthermore, in a similar way, the control determination unit 315 calculates the difference between the direction of the rotation plane (yaw angle) of the rotor 24 of the windward-located wind power generation apparatus 2a in the case of executing the wake centralization control (Fig. 9) and the wind direction of the wind flowing into the rotation plane of the rotor 24 of itself (the windward-located wind power generation apparatus 2a) that is determined by the wind direction calculation unit 312. Subsequently, the control determination unit 315 selects the wake avoidance control (Fig. 8) or the wake centralization control (Fig. 9) that provides the smaller difference, and transfers the selected control to the yaw angle calculation unit 316 via the internal bus 319.

At step S5208, the yaw angle calculation unit 316 outputs the direction of the rotation plane (yaw angle) of the rotor 24 of the windward-located wind power generation apparatus 2a that corresponds to the one of the wake avoidance control (Fig. 8), the wake centralization control (Fig. 9), and the continuation of the normal operation selected by the control determination unit 315 to the yaw angle control device 33 as a yaw angle control command via the output I/F, and this processing is ended.

As described above, according to this embodiment, in addition to the advantageous effects brought about by the first embodiment, both of the stable supply of electric power when necessary and the reduction of the damage degree of a wind power generation apparatus can be satisfied by changing the order of priority given to each of the abovementioned controls.

The present invention is not limited to the above embodiment, and various modification examples can be included in the present invention. For example, the above embodiment has been described in detail in order to make the present invention easily understood, and therefore all the components described so far are not always indispensable for the present invention. In addition, a part of the configuration of a certain embodiment can be replaced by the configuration of another embodiment, or the configuration of another embodiment can be added to the configuration of a certain embodiment.

### List of Reference Signs

- 1:: Wind Farm
- 2:: Wind Power Generation Apparatus
- 2a:: Windward-located Wind Power Generation Apparatus
- 2b:: Leeward-located Wind Power Generation Apparatus
- 2c, 2d:: Wind Power Generation Apparatus
- 20:: Tower
- 21:: Nacelle
- 22:: Hub
- 23:: Blade
- 24:: Rotor
- 25:: Main Shaft
- 27:: Speed-up Machine
- 28:: Electric Power Generator
- 29:: Main Frame
- 30:: Electric Power Converter
- 31, 31a, 31b, 31c, 31d:: Control Device
- 32:: Wind Direction/Wind Speed Meter
- 33:: Yaw Angle Control Device
- 311:: Measurement Value Acquisition Unit
- 312:: Wind Direction Calculation Unit
- 313:: Windmill Wake Calculation Unit
- 314:: Position Judgment Unit
- 315:: Control Determination Unit
- 316:: Yaw Angle Calculation Unit
- 317a:: Input I/F
- 317b:: Output I/F
- 317c:: Communication I/F
- 318:: Memory Unit
- 319:: Internal Bus
- 320:: Operation Achievement Holding Unit
- 321:: Damage Degree Calculation Unit
- 323:: Demand Prediction Unit

## Claims

1. A wind farm (1) including at least a plurality of wind power generation apparatuses (2) each of which includes a rotor (24) that rotates on receiving the wind and a yaw angle control device (33) for controlling the direction of the rotation plane of the rotor (24), comprising:
a control device (31) that determines a wake region on the basis of wind direction data and information regarding the direction of the rotation plane of the rotor (24) of a windward-located wind power generation apparatus (2a), and controls the direction of the rotation plane of the rotor (24) of the windward-located wind power generation apparatuses (2a) on the basis of the determined wake region and positional information regarding a leeward-located wind power generation apparatus (2b).

2. The wind farm (1) according to Claim 1,
wherein the control device (31) controls the direction of the rotation plane of the rotor (24) of the windward-located wind power generation apparatus (2a) so that a load that is received by the leeward-located wind power generation apparatus (2b) is reduced.

3. The wind farm (1) according to Claim 1 or Claim 2,
wherein the control device (31) controls the direction of the rotation plane of the rotor (24) of the windward-located wind power generation apparatus (2a) so that the leeward-located wind power generation apparatus (2b) is located on the inside of the wake region or outside of the wake region generated by the windward-located wind power generation apparatus (2a).

4. The wind farm (1) according to Claim 3,
wherein the control device (31) controls the direction of the rotation plane of the rotor (24) of the windward-located wind power generation apparatus (2a) so that the leeward-located wind power generation apparatus (2b) is located in the central part of the wake region generated by the windward-located wind power generation apparatus (2a).

5. The wind farm (1) according to Claim 4,
wherein the control device (31) includes:
a yaw angle calculation unit (316) that calculates a first direction that is the direction of the rotation plane of the rotor (24) of the windward-located wind power generation apparatus (2a) so that the leeward-located wind power generation apparatus (2b) is located on the inside of the wake region, and at the same time, calculates a second direction that is the direction of the rotation plane of the rotor (24) of the windward-located wind power generation apparatus (2a) so that the leeward-located wind power generation apparatus (2b) is located on the outside of the wake region; and
a control determination unit (315) that calculates the difference between the first direction and the wind direction data and the difference between the second direction and the wind direction data, and determines the direction of the rotation plane of the rotor (24) of the windward-located wind power generation apparatus (2a) so that the direction of the rotation plane of the rotor (24) of the windward-located wind power generation apparatus (2a) becomes equal to one of the first direction and the second direction that provides the smaller calculated difference.

6. The wind farm (1) according to Claim 5,
wherein the control device (31) includes:
at least an operational achievement holding unit (320) in which information including the operation history of the windward-located wind power generation apparatus (2a) is stored; and
a damage degree calculation unit (321) that calculates the damage degree of the windward-located wind power generation apparatus (2a) on the basis of the operation history, and at the same time, calculates a tolerance value of the difference between the first direction and the wind direction data and a tolerance value of the difference between the second direction and the wind direction data on the basis of the calculated damage degree, and
the control determination unit (315) determines the direction of the rotation plane of the rotor (24) of the windward-located wind power generation apparatus (2a) so that the direction of the rotation plane of the rotor (24) of the windward-located wind power generation apparatus (2a) becomes equal to the first direction or the second direction that provides the smaller calculated difference which is smaller than the relevant tolerance value.

7. The wind farm (1) according to Claim 5,
wherein the control device (31) includes:
at least an operational achievement holding unit (320) in which information including the operation history of the windward-located wind power generation apparatus (2a) is stored; and
a damage degree calculation unit (321) that calculates the damage degree of the windward-located wind power generation apparatus (2a) on the basis of the operation history, and
the control determination unit (315) determines the direction of the rotation plane of the rotor (24) of the windward-located wind power generation apparatus (2a) so that the leeward-located wind power generation apparatus (2b) is located on the inside of the wake region in the case where the damage degree of the windward-located wind power generation apparatus (2a) is larger than the damage degree of the leeward-located wind power generation apparatus (2b), where both damage degrees are acquired via a communication interface, and determines the direction of the rotation plane of the rotor (24) of the windward-located wind power generation apparatus (2a) so that the leeward-located wind power generation apparatus (2b) is located on the outside of the wake region in the case where the damage degree of the leeward-located wind power generation apparatus (2b) is larger than the damage degree of the windward-located wind power generation apparatus (2a).

8. The wind farm (1) according to Claim 5,
wherein the control device (31) includes a demand prediction unit (323) for predicting a demand for electric power on the basis of time slots and/or seasons, and
the control determination unit (315) determines the direction of the rotation plane of the rotor (24) of the windward-located wind power generation apparatus (2a) so that the leeward-located wind power generation apparatus (2b) is located on the outside of the wake region or the rotation plane of the rotor (24) of the windward-located wind power generation apparatus (2a) faces the wind direction squarely in the case where the demand for electric power predicted by the demand prediction unit (323) is large, and determines the direction of the rotation plane of the rotor (24) of the windward-located wind power generation apparatus (2a) so that the rotation plane of the rotor (24) of the windward-located wind power generation apparatus (2a) becomes equal to the first direction or the second direction that provides the smaller calculated difference in the case where the demand for electric power predicted by the demand prediction unit (323) is small.

9. A wind power generation apparatus (2) that can be installed in a wind farm (1), the wind power generation apparatus (2) comprising at least:
a rotor (24) that rotates on receiving the wind;
a yaw angle control device (33) that controls the direction of the rotation plane of the rotor (24); and
a control device (31) that determines a wake region on the basis of wind direction data and information regarding the direction of the rotation plane of the rotor (24), and controls the direction of the rotation plane of the rotor (24) on the basis of the determined wake region and positional information regarding other leeward-located wind power generation apparatuses (2b).

10. The wind power generation apparatus (2) according to Claim 9,
wherein the control device (31) controls the direction of the rotation plane of the rotor (24) so that loads that are received by the other leeward-located wind power generation apparatuses (2b) are reduced.

11. The wind power generation apparatus (2) according to Claim 9 or Claim 10,
wherein the control device (31) controls the direction of the rotation of the rotor (24) so that the other leeward-located wind power generation apparatuses (2b) are located on the inside of the wake region or outside of the wake region.

12. The wind power generation apparatus (2) according to Claim 11,
wherein the control device (31) controls the direction of the rotation of the rotor (24) so that the other leeward-located wind power generation apparatuses (2b) are located in the central part of the wake region.

13. The wind power generation apparatus (2) according to Claim 12,
wherein the control device (31) includes:
a yaw angle calculation unit (316) that calculates a first direction that is the direction of the rotation plane of the rotor (24) so that the other leeward-located wind power generation apparatuses (2b) are located on the inside of the wake region, and at the same time, calculates a second direction that is the direction of the rotation plane of the rotor (24) so that the other leeward-located wind power generation apparatuses (2b) are located on the outside of the wake region; and
a control determination unit (315) that calculates the difference between the first direction and the wind direction data and the difference between the second direction and the wind direction data, and determines the direction of the rotation plane of the rotor (24) so that the direction of the rotation plane of the rotor (24) becomes equal to the first direction or the second direction that provides the smaller calculated difference.

14. The wind power generation apparatus (2) according to Claim 13,
wherein the control device (31) includes:
at least an operational achievement holding unit (320) in which information including the operation history is stored; and
a damage degree calculation unit that calculates the damage degree on the basis of the operation history, and at the same time, calculates the tolerance value of the difference between the first direction and the wind direction data and the tolerance value of the difference between the second direction and the wind direction data on the basis of the calculated damage degree, and
the control determination unit (315) determines the direction of the rotation plane of the rotor (24) so that the direction of the rotation plane becomes equal to the first direction or the second direction that provides the smaller calculated difference which is smaller than the relevant tolerance value.

15. The wind power generation apparatus (2) according to Claim 13,
wherein the control device (31) includes:
at least an operational achievement holding unit (320) in which information including the operation history of the wind power generation apparatus (2) is stored; and
a damage degree calculation unit (321) that calculates the damage degree on the basis of the operation history, and
the control determination unit (315) determines the direction of the rotation plane of the rotor (24) so that the other leeward-located wind power generation apparatus (2b) are located on the inside of the wake region in the case where the damage degree calculated by the damage degree calculation unit (321) is larger than the damage degrees of the other leeward-located wind power generation apparatuses (2b) that are acquired via a communication interface, and determines the direction of the rotation plane of the rotor (24) so that the other leeward-located wind power generation apparatuses (2b) are located on the outside of the wake region in the case where the damage degrees of the other leeward-located wind power generation apparatuses (2b) are larger than the damage degree calculated by the damage degree calculation unit (321).
